(19) Europäisches Patentamt
European Patent Office
Office européen des brevets

(11) **EP 4 315 787 B1**

(12) **EUROPEAN PATENT SPECIFICATION**

(45) Date of publication and mention
of the grant of the patent:
**07.05.2025 Bulletin 2025/19**

(21) Application number: **22719909.8**

(22) Date of filing: **31.03.2022**

(51) International Patent Classification (IPC):
*H04L 43/0852* (2022.01)    *H04W 56/00* (2009.01)
*H04B 7/185* (2006.01)    *H04L 43/0864* (2022.01)

(52) Cooperative Patent Classification (CPC):
**H04L 43/0852; H04B 7/18513; H04W 56/0045;**
H04L 43/0864

(86) International application number:
**PCT/EP2022/058601**

(87) International publication number:
**WO 2022/207805 (06.10.2022 Gazette 2022/40)**

(54) **SIGNALING OF FEEDER LINK AND COMMON DELAY IN NTN**

SIGNALISIERUNG EINER FEEDER-VERBINDUNG UND GEMEINSAMER VERZÖGERUNG IN NTN

SIGNALISATION DE LIAISON DE CONNEXION ET RETARD COMMUN DANS UN NTN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.04.2021 EP 21166692**

(43) Date of publication of application:
**07.02.2024 Bulletin 2024/06**

(73) Proprietor: **Fraunhofer-Gesellschaft zur
Förderung
der angewandten Forschung e.V.
80686 München (DE)**

(72) Inventors:
• **AHMADZADEH, Arman**
91058 Erlangen (DE)
• **HEYN, Thomas**
91058 Erlangen (DE)
• **ROTH-MANDUTZ, Elke**
91058 Erlangen (DE)
• **HOFMANN, Alexander**
91058 Erlangen (DE)

(74) Representative: **Schlenker, Julian et al
Schoppe, Zimmermann, Stöckeler
Zinkler, Schenk & Partner mbB
Patentanwälte
Radlkoferstraße 2
81373 München (DE)**

(56) References cited:
**EP-A1- 3 447 936    US-A1- 2021 029 658**

• **HUAWEI ET AL: "Discussion on UL time and
frequency synchronization enhancement for
NTN", vol. RAN WG1, no. E-meeting; 20210125 -
20210205, 19 January 2021 (2021-01-19),
XP051970855, Retrieved from the Internet
<URL:https://ftp.3gpp.org/tsg_ran/WG1_RL1/
TSGR1_104-e/Docs/R1-2100223.zip
R1-2100223.docx> [retrieved on 20210119]**
• **FRAUNHOFER IIS ET AL: "Discussion on UL
Time Synchronization for NTN", vol. RAN WG1,
no. e-Meeting; 20210510 - 20210527, 11 May 2021
(2021-05-11), XP052006330, Retrieved from the
Internet <URL:https://ftp.3gpp.org/tsg_ran/
WG1_RL1/TSGR1_105-e/Docs/R1-2105272.zip
R1-2105272_Discussion on UL Time
Synchronization for NTN.docx> [retrieved on
20210511]**

- **MODERATOR (THALES): "FL Summary on enhancements on UL time and frequency synchronization for NR", vol. RAN WG1, no. e-Meeting; 20210125 - 20210205, 8 February 2021 (2021-02-08), XP051977777, Retrieved from the Internet <URL:https://ftp.3gpp.org/tsg_ran/ WG1_RL1/TSGR1_104-e/Docs/R1-2102215.zip R1-2102215.docx> [retrieved on 20210208]**

- **MODERATOR (THALES): "FL Summary on enhancements on UL time and frequency synchronization for NR", vol. RAN WG1, no. e-Meeting; 20210125 - 20210205, 8 February 2021 (2021-02-08), XP051977777, Retrieved from the Internet <URL:https://ftp.3gpp.org/tsg_ran/ WG1_RL1/TSGR1_104-e/Docs/R1-2102215.zip R1-2102215.docx> [retrieved on 20210208]**

**Description**

Embodiments of the present application relate to the field of wireless communication, and more specifically, to wireless communication between a base station, gNB, and a user equipment via a satellite / non-terrestrial network, NTN. Some embodiments relate to signaling of feeder link and common delay in NTN.

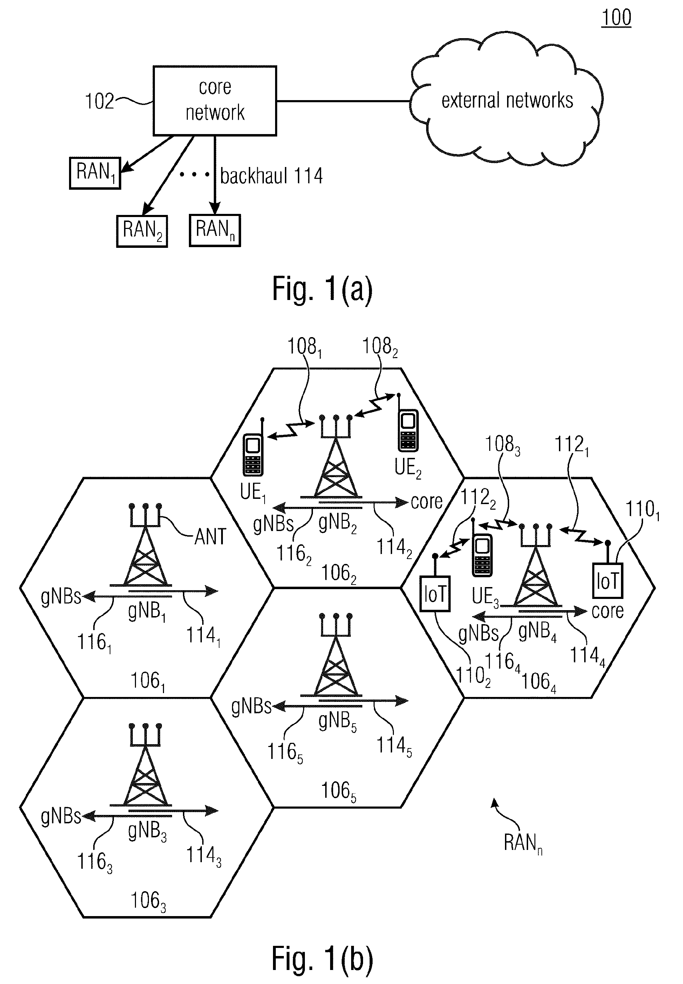

Fig. 1 is a schematic representation of an example of a terrestrial wireless network 100 including, as is shown in Fig. 1(a), a core network 102 and one or more radio access networks $RAN_1$, $RAN_2$, ... $RAN_N$. Fig. 1(b) is a schematic representation of an example of a radio access network $RAN_n$ that may include one or more base stations $gNB_1$ to $gNB_5$, each serving a specific area surrounding the base station schematically represented by respective cells $106_1$ to $106_5$. The base stations are provided to serve users within a cell. The term base station, BS, refers to a gNB in 5G networks, an eNB in UMTS/LTE/LTE-A/ LTE-A Pro, or just a BS in other mobile communication standards. A user may be a stationary device or a mobile device. The wireless communication system may also be accessed by mobile or stationary IoT devices which connect to a base station or to a user. The mobile devices or the IoT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enables these devices to collect and exchange data across an existing network infrastructure. Fig. 1(b) shows an exemplary view of five cells, however, the $RAN_n$ may include more or less such cells, and $RAN_n$ may also include only one base station. Fig. 1(b) shows two users $UE_1$ and $UE_2$, also referred to as user equipment, UE, that are in cell $106_2$ and that are served by base station $gNB_2$. Another user $UE_3$ is shown in cell $106_4$ which is served by base station $gNB_4$. The arrows $108_1$, $108_2$ and $108_3$ schematically represent uplink/downlink connections for transmitting data from a user $UE_1$, $UE_2$ and $UE_3$ to the base stations $gNB_2$, $gNB_4$ or for transmitting data from the base stations $gNB_2$, $gNB_4$ to the users $UE_1$, $UE_2$, $UE_3$. Further, Fig. 1(b) shows two IoT devices $110_1$ and $110_2$ in cell $106_4$, which may be stationary or mobile devices. The IoT device $110_1$ accesses the wireless communication system via the base station $gNB_4$ to receive and transmit data as schematically represented by arrow $112_1$. The IoT device $110_2$ accesses the wireless communication system via the user $UE_3$ as is schematically represented by arrow $112_2$. The respective base station $gNB_1$ to $gNB_5$ may be connected to the core network 102, e.g., via the S1 interface, via respective backhaul links $114_1$ to $114_5$, which are schematically represented in Fig. 1(b) by the arrows pointing to "core". The core network 102 may be connected to one or more external networks. Further, some or all of the respective base station $gNB_1$ to $gNB_5$ may connected, e.g., via the S1 or X2 interface or the XN interface in NR, with each other via respective backhaul links $116_1$ to $116_5$, which are schematically represented in Fig. 1(b) by the arrows pointing to "gNBs".

For data transmission a physical resource grid may be used. The physical resource grid may comprise a set of resource elements to which various physical channels and physical signals are mapped. For example, the physical channels may include the physical downlink, uplink and sidelink shared channels (PDSCH, PUSCH, PSSCH) carrying user specific data, also referred to as downlink, uplink and sidelink payload data, the physical broadcast channel (PBCH) carrying for example a master information block (MIB), the physical downlink shared channel (PDSCH) carrying for example a system information block (SIB), the physical downlink, uplink and sidelink control channels (PDCCH, PUCCH, PSSCH) carrying for example the downlink control information (DCI), the uplink control information (UCI) and the sidelink control information (SCI). For the uplink, the physical channels, or more precisely the transport channels according to 3GPP, may further include the physical random access channel (PRACH or RACH) used by UEs for accessing the network once a UE is synchronized and has obtained the MIB and SIB. The physical signals may comprise reference signals or symbols (RS), synchronization signals and the like. The resource grid may comprise a frame or radio frame having a certain duration in the time domain and having a given bandwidth in the frequency domain. The frame may have a certain number of subframes of a predefined length, e.g., 1ms. Each subframe may include one or more slots of 12 or 14 OFDM symbols depending on the cyclic prefix (CP) length. All OFDM symbols may be used for DL or UL or only a subset, e.g., when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g., DFT-s-OFDM. Other waveforms, like non-orthogonal waveforms for multiple access, e.g., filter-bank multicarrier (FBMC), generalized frequency division multiplexing (GFDM) or universal filtered multi carrier (UFMC), may be used. The wireless communication system may operate, e.g., in accordance with the LTE-Advanced pro standard or the NR (5G), New Radio, standard.

The wireless network or communication system depicted in Fig. 1 may by a heterogeneous network having distinct overlaid networks, e.g., a network of macro cells with each macro cell including a macro base station, like base station $gNB_1$ to $gNB_5$, and a network of small cell base stations (not shown in Fig. 1), like femto or pico base stations.

In addition to the above described terrestrial wireless network also non-terrestrial wireless communication networks exist including spaceborne transceivers, like satellites, and/or airborne transceivers, like unmanned aircraft systems. The non-terrestrial wireless communication network or system may operate in a similar way as the terrestrial system described above with reference to Fig. 1, for example in accordance with the LTE-Advanced Pro standard or the NR (5G), new radio, standard.

In mobile communication networks, for example in a network like that described above with reference to Fig. 1, like an LTE or 5G/NR network, there may be UEs that communicate directly with each other over one or more sidelink (SL) channels, e.g., using the PC5 interface. UEs that communicate directly with each other over the sidelink may include vehicles communicating directly with other vehicles (V2V communication), vehicles communicating with other entities of the wireless communication network (V2X communication), for example roadside entities, like traffic lights, traffic signs, or pedestrians. Other UEs may not be vehicular related UEs and may comprise any of the above-mentioned devices. Such devices may also communicate directly with each other (D2D communication) using the SL channels.

When considering two UEs directly communicating with each other over the sidelink, both UEs may be served by the same base station so that the base station may provide sidelink resource allocation configuration or assistance for the UEs. For example, both UEs may be within the coverage area of a base station, like one of the base stations depicted in Fig. 1. This is referred to as an "in-coverage" scenario. Another scenario is referred to as an "out-of-coverage" scenario. It is noted that "out-of-coverage" does not mean that the two UEs are not within one of the cells depicted in Fig. 1, rather, it means that these UEs

- may not be connected to a base station, for example, they are not in an RRC connected state, so that the UEs do not receive from the base station any sidelink resource allocation configuration or assistance, and/or
- may be connected to the base station, but, for one or more reasons, the base station may not provide sidelink resource allocation configuration or assistance for the UEs, and/or
- may be connected to the base station that may not support NR V2X services, e.g., GSM, UMTS, LTE base stations.

When considering two UEs directly communicating with each other over the sidelink, e.g., using the PC5 interface, one of the UEs may also be connected with a BS, and may relay information from the BS to the other UE via the sidelink interface. The relaying may be performed in the same frequency band (in-band-relay) or another frequency band (out-of-band relay) may be used. In the first case, communication on the Uu and on the sidelink may be decoupled using different time slots as in time division duplex, TDD, systems.

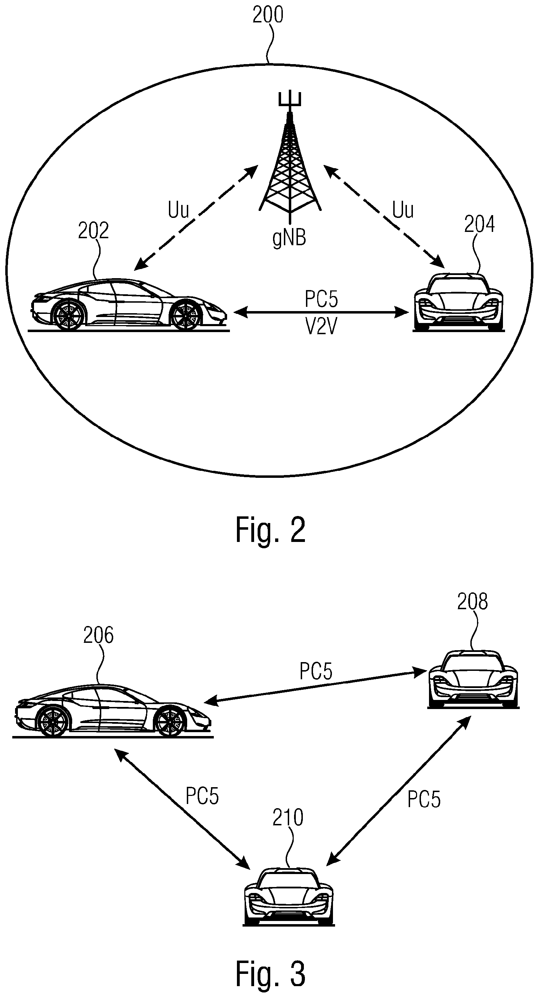

Fig. 2 is a schematic representation of an in-coverage scenario in which two UEs directly communicating with each other are both connected to a base station. The base station gNB has a coverage area that is schematically represented by the circle 200 which, basically, corresponds to the cell schematically represented in Fig. 1. The UEs directly communicating with each other include a first vehicle 202 and a second vehicle 204 both in the coverage area 200 of the base station gNB. Both vehicles 202, 204 are connected to the base station gNB and, in addition, they are connected directly with each other over the PC5 interface. The scheduling and/or interference management of the V2V traffic is assisted by the gNB via control signaling over the Uu interface, which is the radio interface between the base station and the UEs. In other words, the gNB provides SL resource allocation configuration or assistance for the UEs, and the gNB assigns the resources to be used for the V2V communication over the sidelink. This configuration is also referred to as a mode 1 configuration in NR V2X or as a mode 3 configuration in LTE V2X.

Fig. 3 is a schematic representation of an out-of-coverage scenario in which the UEs directly communicating with each other are either not connected to a base station, although they may be physically within a cell of a wireless communication network, or some or all of the UEs directly communicating with each other are to a base station but the base station does not provide for the SL resource allocation configuration or assistance. Three vehicles 206, 208 and 210 are shown directly communicating with each other over a sidelink, e.g., using the PC5 interface. The scheduling and/or interference management of the V2V traffic is based on algorithms implemented between the vehicles. This configuration is also referred to as a mode 2 configuration in NR V2X or as a mode 4 configuration in LTE V2X. As mentioned above, the scenario in Fig. 3 which is the out-of-coverage scenario does not necessarily mean that the respective mode 2 UEs (in NR) or mode 4 UEs (in LTE) are outside of the coverage 200 of a base station, rather, it means that the respective mode 2 UEs (in NR) or mode 4 UEs (in LTE) are not served by a base station, are not connected to the base station of the coverage area, or are connected to the base station but receive no SL resource allocation configuration or assistance from the base station. Thus, there may be situations in which, within the coverage area 200 shown in Fig. 2, in addition to the NR mode 1 or LTE mode 3 UEs 202, 204 also NR mode 2 or LTE mode 4 UEs 206, 208, 210 are present.

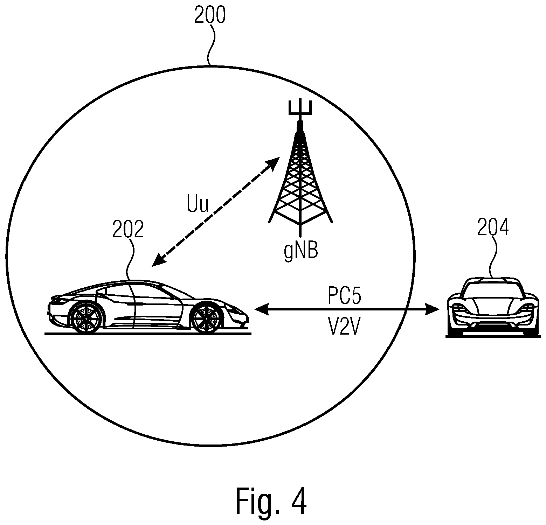

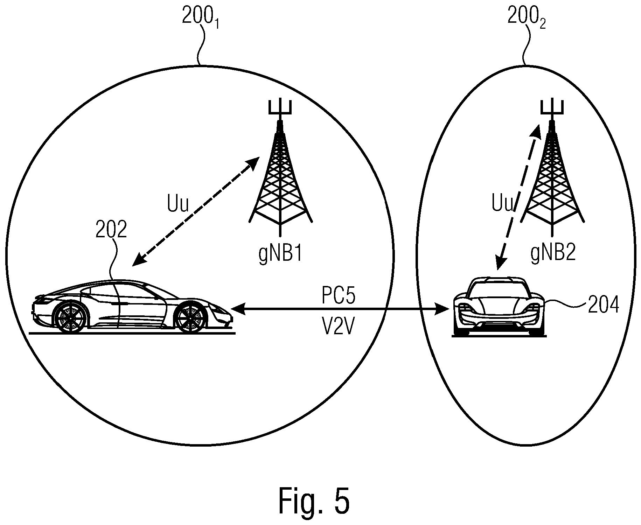

Naturally, it is also possible that the first vehicle 202 is covered by the gNB, i.e. connected with Uu to the gNB, wherein the second vehicle 204 is not covered by the gNB and only connected via the PC5 interface to the first vehicle 202, or that the second vehicle is connected via the PC5 interface to the first vehicle 202 but via Uu to another gNB, as will become clear from the discussion of Figs. 4 and 5.

Fig. 4 is a schematic representation of a scenario in which two UEs directly communicating with each, wherein only one of the two UEs is connected to a base station. The base station gNB has a coverage area that is schematically represented by the circle 200 which, basically, corresponds to the cell schematically represented in Fig. 1. The UEs directly communicating with each other include a first vehicle 202 and a second vehicle 204, wherein only the first vehicle 202 is in the coverage area 200 of the base station gNB. Both vehicles 202, 204 are connected directly with each other over the PC5 interface.

Fig. 5 is a schematic representation of a scenario in which two UEs directly communicating with each, wherein the two UEs are connected to different base stations. The first base station $gNB_1$ has a coverage area that is schematically represented by the first circle $200_1$, wherein the second station $gNB_2$ has a coverage area that is schematically represented by the second circle $200_2$. The UEs directly communicating with each other include a first vehicle 202 and a second vehicle 204, wherein the first vehicle 202 is in the coverage area $200_1$ of the first base station $gNB_1$ and connected to the first base station $gNB_1$ via the Uu interface, wherein the second vehicle 204 is in the coverage area $200_2$ of the second base station $gNB_2$ and connected to the second base station $gNB_2$ via the Uu interface.

In a wireless communication system as described above, in 3GPP a new working item (WI), introducing Non-Terrestrial Networks (NTN) has been started. Within this WI the technical feasibility of various satellite systems (GEO, MEO, LEO, etc.) and High Altitude Platforms (HAPS) to be part of the network architecture of 3GPP Rel-17 will be studied.

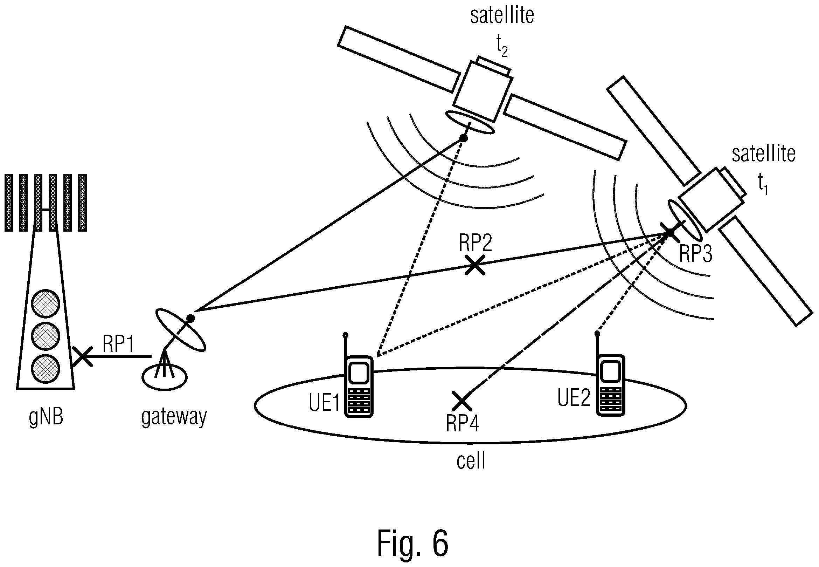

One of the unique features of NTN is the large propagation delays experienced between user terminals (UE) and satellite systems, and as a consequence, the gNB. Typically, the propagation delays in terrestrial systems are less than 1 ms. However, in NTN, the propagation delays can potentially range from several milliseconds to hundreds of milliseconds depending on the altitudes of the spaceborne or airborne platforms and payload type in NTN, as indicated by way of example in Fig. 6.

Specifically, Fig. 6 shows a schematic block diagram of a wireless communication system comprising a gNB connected via a satellite gateway to a moving NTN satellite for serving a cell in which two UEs are located. Thereby, in Fig. 6, t1 and t2 denote the times at which the satellite is located in the corresponding positions. Obviously, the movement of the satellite causes a change of the round trip time or delay between the gNB and the corresponding UE.

In [HUAWEI ET AL: "Discussion on UL time and frequency synchronization enhancement for NTN", 3GPP DRAFT; R1-2100223, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-meeting; 20210125 - 20210205 19 Januar: 2021 (2021-01-19), XP051970855, Retrieved from the Internet: URL:https://ftp.3gpp.org/tsg_ran/ WG1_RL1/TSGR1_104-e/Docs/ R1-2100223.zip R1-2100223.docx] describes different options for UL timing synchronization for NTN.

Thus, starting from the above, there is a need for enhancements, improvements and/or modifications of one or more RAN procedures (e.g., from physical layer to higher layers) in order to be able to cope with large propagation delays in NTN.

It is noted that the information in the above section is only for enhancing the understanding of the background of the invention and therefore it may contain information that does not form prior art and is already known to a person of ordinary skill in the art.

Embodiments of the present invention are described herein making reference to the appended drawings.

Fig. 1     shows a schematic representation of an example of a wireless communication system;

Fig. 2     is a schematic representation of an in-coverage scenario in which UEs directly communicating with each other are connected to a base station;

Fig. 3     is a schematic representation of an out-of-coverage scenario in which UEs directly communicating with each other receive no SL resource allocation configuration or assistance from a base station;

Fig. 4     is a schematic representation of a partial out-of-coverage scenario in which some of the UEs directly communicating with each other receive no SL resource allocation configuration or assistance from a base station;

Fig. 5     is a schematic representation of an in-coverage scenario in which UEs directly communicating with each other are connected to different base stations;

Fig. 6     shows a schematic block diagram of a wireless communication system comprising a gNB connected via a satellite gateway to a moving NTN satellite for serving a cell in which two UEs are located,

Fig. 7     shows in a diagram feeder link RTT as a function of time [4],

Fig. 8     shows a schematic representation of a wireless communication system comprising a transceiver, like a base station, and a plurality of communication devices, like UEs, communicating with transceiver via a satellite / non-terrestrial network,

Fig. 9     shows in a diagram a common delay as a function of time for different satellite altitudes,

Fig. 10    shows in a diagram a common delay as a function of time for different elevation angles,

Fig. 11    shows in a diagram the common delay (RTT of feeder link) plotted as a function of time for simulated RTT and estimated RTT via a power function, and

Fig. 12    illustrates an example of a computer system on which units or modules as well as the steps of the methods described in accordance with the inventive approach may execute.

Equal or equivalent elements or elements with equal or equivalent functionality are denoted in the following description by equal or equivalent reference numerals.

In the following description, a plurality of details are set forth to provide a more thorough explanation of embodiments of the present invention. However, it will be apparent to one skilled in the art that embodiments of the present invention may be practiced without these specific details. In other instances, well-known structures and devices are shown in block diagram form rather than in detail in order to avoid obscuring embodiments of the present invention.

As already indicated above in the introduction, in 3GPP a new working item (WI), introducing Non-Terrestrial Networks (NTN) has been started. Within this WI the technical feasibility of various satellite systems (GEO, MEO, LEO, etc.) and High Altitude Platforms (HAPS) to be part of the network architecture of 3GPP Rel-17 will be studied.

One of the unique features of NTN is the large propagation delays experienced between user terminals (UE) and satellite systems, and as a consequence, the gNB. Typically, the propagation delays in terrestrial systems are less than 1 ms. However, in NTN, the propagation delays can potentially range from several milliseconds to hundreds of milliseconds depending on the altitudes of the spaceborne or airborne platforms and payload type in NTN.

In order to be able to cope with large propagation delays in NTN, there is a need for modifying one or more RAN procedures, e.g., from physical layer to higher layers [1], [2].

In the following, first, some examples of the procedures affected by large propagation delays in NTN are described. Second, relevant components of propagation delay in NTN, i.e., UE specific delay and UE common delay, are described.

Procedures affected by NTN propagation delay

From RAN2 perspective, 4-step random access channel (RACH) and 2-step RACH procedures are affected. In particular, in RAN2 #112e [5] it was agreed to compensate the start of "*ra-ResponseWindow*" and "*msgB-Response-Window*" by user equipment (UE)-gNB round trip time (RTT). The agreement is provided below:

> Agreement
> If the start of the *ra-ResponseWindow* and *msgB-ResponseWindow* is accurately compensated by UE-gNB RTT, *ra-ResponseWindow* and *msgB-ResponseWindow* are not extended in LEO/GEO.

In particular, *ra-ResponseWindow* and *msgB-ResponseWindow* are certain window of time in which UE expects to receive the message-2 (MSG2) from gNB, also called response message, to its preamble transmission in message-1 (MSG1) in 4-step and 2-step random access procedure, respectively.

Another procedure in RAN2 affected by UE-gNB delay (or RTT) is related to HARQ. Specifically, in RAN2 #112e & #113e [5]-[6] it is agreed that for NTN UEs with pre-compensation capability, *drx-HARQ-RTT-TimerDL* is offset by UE-specific RTT (UE-gNB delay) . The agreement is provided below:

> Agreement
> For UE with pre-compensation capability (at least for the HARQ-feedback enabled case. FFS for HARQ-feedback disabled, if supported), drx-HARQ-RTT-TimerDL is offset by UE-specific RTT (UE-gNB delay) in LEO/GEO. FFS if offset is applied to: 1) the start of the timers or 2) the timer value range (i.e. existing values within value range increased by offset)

From RAN1 perspective, one of the important procedures affected by large propagation delays in NTN is the timing advance procedure [2]. In timing advance procedure, after gNB estimates the RTT of UE, it sends the timing advance command for adjusting the uplink transmission timing of UE. Clearly, the value of timing advance command is related to UE-gNB RTT.

Another procedure dedicated to NTN is the procedure of feeder link switching [2]. In feeder link switching procedure, a satellite serving a UE in a cell is switched with a new satellite, and, as a result of this, the feeder link, i.e., communication link between the satellite and the gateway, must be switched. Since the new satellite has a different geographical location compare to the old serving satellite, UE-gNB RTT is changed and the delay of the feeder link must be signaled to the UE.

It can be observed from the above discussion that there are several procedures in NTN specifically need to be enhanced via UE-gNB RTT/delay.

In the following, the components of UE-gNB RTT/delay is described in further detail.

UE-gNB RTT/Delay

Generally, the end-to-end delay experienced by NTN UE can be split into two major parts namely, UE specific delay and UE common delay. Calculation of both, UE specific and UE common delay depends on the choice of the so-called reference point (RP). In particular, RP is defined as the point with respect to which the downlink and uplink frames are aligned after UE applies the TA command in RACH procedure. As a result of this, the value of TA is calculated with respect to RP. Typically, RP can be chosen to be at gNB, at feeder link, at the satellite, or at a point located at service link. It is decided in RAN1 that the choice of RP is arbitrary and it must be under control of the network, and should at least include the RP at gNB, see Fig. 6. For instance, when the RP is chosen to be at satellite (RP3 in Fig. 6), when UE applies the TA command, the uplink and downlink frames are aligned at satellite and gNB has to deal with not aligned uplink and downlink frame timing and applies a post timing compensation based on RTT of feeder link.

On the other hand, the choice of RP at gNB (RP1 in Fig. 6) leads to frames timing in uplink and downlink that are aligned at gNB. Given the definition of the reference point above, the UE specific delay and UE common delay can be defined as described in the following.

The UE specific delay can be defined as the delay of the UE to the satellite. When RP is defined to be located at service link, the UE specific delay can be defined as the delay of the UE to the RP. In Rel17, NTN UE is assumed to be equipped with GNSS unit. As a result of this, GNSS equipped UE can estimate the distance to satellite together with the assistance of satellite ephemeris and calculates the UE-Satellite delay. If RP is chosen to be at service link, e.g. RP 4 in Fig. 6, then UE specific delay can be evaluated after subtracting the delay of Satellite to RP (Satellite-RP delay) from the UE-Satellite delay.

The UE common delay can be defined as the delay of satellite to the RP (Satellite-RP). Depending on the location of RP, UE common delay can be evaluated as follows:

o It can capture the partial delay of the feeder link, when RP is chosen on the feeder link, e.g. RP 2 in Fig. 6.
o It can be set to zero. This is the case when RP is chosen to be at satellite, e.g. RP 3 in Fig. 6.
∘ It can capture the partial delay of the service link, when RP is chosen on the service link, e.g. RP 4 in Fig. 6.
o It can capture the entire feeder link delay, i.e., gNB-gateway-Satellite delay, when the RP is chosen to be at gNB, e.g. RP 1 in Fig. 6.

In addition to the common delay, the feeder link delay can be defined as the delay of gNB to the RP. Note that for the case of RP at service link, feeder link delay can be defined as the delay of gNB to satellite. Some of the procedures reviewed in the beginning of this section may require the knowledge of end-to-end UE-gNB delay. Given the definition of the UE specific and UE common delay as above, unless for the case of RP at the gNB, for calculation of UE-gNB delay, signaling of both common delay and feeder link delay from network to UE may be required.

Thereby it is noted that in the following description, it is referred to the feeder link delay and the common delay together, for conciseness of presentation and by way of example, as common delay. In other words, in the below description it is exemplarily assumed that RP is located at gNB. However, the procedures described in the following sections are also valid for other choices of RP as well.

Furthermore, due to the motion of satellite, the common delay is changed over time. For instance, in Fig. 6, the distance of the satellite to gateway is reduced from time $t_1$ to $t_2$ and leads to a change for the value of common delay. Thus, updated values of common delay need to be signaled to UE in order to update the outdated UE-gNB RTT.

Given the above discussion, embodiments described below rely on the signaling of common delay in NTN.

Commonly, different options are available for signaling of common delay.

The first option is network centric and gNB signals the absolute value of the common delay to the UE. However, due to the time-varying nature of the common delay, this approach demands for large signaling overhead, as frequent update of the value of the common delay is required especially for LEO and VLEO satellites.

Another option, which is both network centric and UE centric, relies on autonomous calculation of the common delay at the UE side via a given function and signaling (or updating) the parameters of the function from gNB to the UE. This mechanism is proposed in [3], for TA and handover procedure. However, the details of the signaling is not discussed in [3].

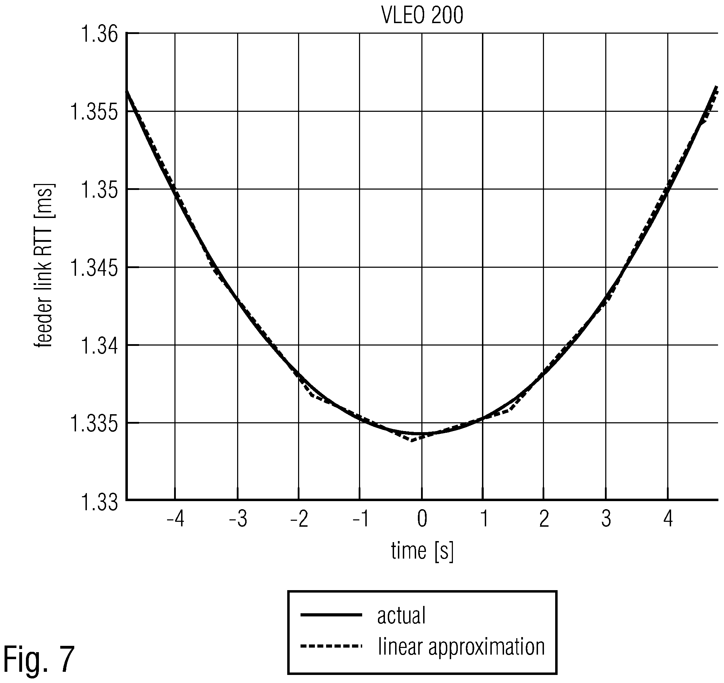

Furthermore, in [4], the "U" shape characteristic of the common delay (feeder link RTT) is approximated via piecewise linear function, see Fig. 7 below. Specifically, Fig. 7 shows in a diagram feeder link RTT as a function of time, [4]. Thereby, the ordinate denotes the feeder link RTT in ms, where the abscissa denotes the time in s.

Then, it is assumed that UE autonomously update the value of common delay, via a linear function, and gNB provide the UE with the parameters of the linear function, i.e., a constant term plus a drift value describing the slope of the linear function.

Clearly, the approach proposed above reduce the signaling overhead compare with the first option network centric introduced above. However, there is tradeoff between accuracy and signaling overhead. In order to have accurate approximation of the actual feeder link delay/RTT, the number of piecewise linear functions increases, which, in turn, increases the signaling overhead.

In the following, embodiments of the present invention are described, which reduce the signaling overhead even further and also improve the accuracy of the common delay estimation.

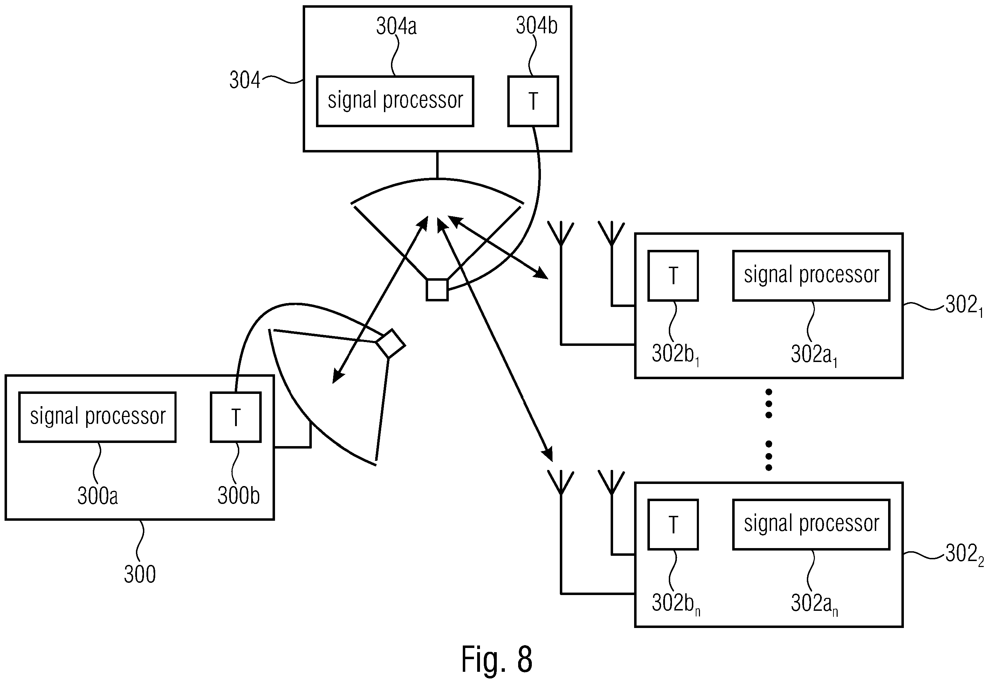

Thereby, embodiments of the present invention may be implemented in a wireless communication system or network as depicted in Figs. 1 to 6 including a transceiver, like a base station, gNB, and a plurality of communication devices, like user equipment's, UEs, communicating with transceiver via a satellite / non-terrestrial network, NTN. Fig. 8 is a schematic representation of a wireless communication system comprising a transceiver 300, like a base station and a plurality of communication devices $302_1$ to $302_n$, like UEs, communicating with transceiver 300 via a satellite / non-terrestrial network 304. The transceiver 300 might include one or more antennas, a signal processor 300a and a transceiver unit 300b. The UEs $302_1$ to $302_n$ might include one or more antennas, a signal processor $302a_1$ to $302a_n$, and a transceiver unit $302b_1$ to $302b_n$. The satellite 304 might include one or more antennas, a signal processor 304a and a transceiver unit 304b. The base station 200 and/or the one or more UEs 202 and/or the satellite 304 may operate in accordance with the inventive teachings described herein.

Embodiments provide a user equipment of a wireless communication system [e.g., 5G / new radio, NR], as defined in claim 1, wherein the user equipment is configured to communicate with a base station [e.g., gNB] of the wireless communication system via a satellite of the wireless communication system, wherein the user equipment is configured to receive, from the base station via the satellite or from another user equipment of the wireless communication system via a sidelink, a control information, the control information signaling at least one parameter [e.g., one or more out of the parameters (a, b, c)] for parameterizing a non-linear function, the parameterized non-linear function [e.g., a parameterized version of the non-linear function] describing a course [e.g., variation] of a round trip time or delay time between

- the satellite and one out of the base station or satellite gateway of the wireless communication system,
- the satellite and a geographical reference point of the wireless communication system,
- a first reference point and a second reference point, the first reference point having a fixed relation [e.g., distance] to the satellite and the second reference point having a fixed relation [e.g., distance] to one out of the base station, satellite gateway or user equipment,

in dependence on a location of the satellite [e.g., with respect to the geographical reference point, the user equipment or a satellite gateway of the wireless communication system] [e.g., when the satellite is in range of the user equipment and/or satellite gateway].

In embodiments, the user equipment is configured to time synchronize [e.g., uplink and/or downlink frames for] communications [e.g., transmissions and/or receptions] with the base station using the parameterized non-linear function.

In embodiments, the user equipment is configured to determine a round trip time or delay time for a certain [e.g., current] time [e.g., slot] using the parameterized non-linear function, wherein the user equipment is configured to time synchronize communications with the base station at the certain time based on the determined round trip time or delay time.

In embodiments, the non non-linear function describes the course of the round trip time or delay time between the satellite and one out of the base station or satellite gateway, wherein the round trip time or delay time is a feeder link round trip time or feeder link delay time.

In embodiments, the non non-linear function describes the course of the round trip time or delay time between the satellite and the geographical reference point, wherein the round trip time or delay time is a common round trip time or common delay time.

In embodiments, the geographical reference point is located in one out of

- the base station,

  - the satellite gateway,
  - a feeder link between the satellite and one out of the satellite gateway or base station,
  - a service link between the satellite and the user equipment or another user equipment of the wireless communication system or a certain point within a cell of the wireless communication system.

In embodiments, in case the geographical reference point is located at the feeder link, the control information further comprises an information describing a feeder link round trip time or delay time between the reference point and one out of the satellite gateway, base station or another reference point.

In embodiments, the user equipment is configured to time synchronize communications with the base station further using the feeder link round trip time or delay time.

In embodiments, in case the geographical reference point is located at the service link, the control information further comprises an information describing a feeder link round trip time or delay time between the satellite and one out of the satellite gateway, base station or another reference point.

In embodiments, the user equipment is configured to time synchronize communications with the base station further using the feeder link round trip time or delay time.

In embodiments, the parameterized non-linear function describes the course of the round trip time or delay time between the first reference point and the second reference point, wherein the control information further describes a [e.g., constant] portion of the round trip time or delay time between the base station and the satellite that is not described by the parameterized non-linear function [e.g., in case that the first reference point is not located at the satellite and/or the second reference point is not located at the base station].

In embodiments, the user equipment is configured to time synchronize communications with the base station further using the portion of the round trip time or delay time that is not described by the parameterized non-linear function.

In embodiments, the non-linear function is a power function or an exponential function or a polynomial function.

In embodiments, the non-linear function is

$$T_{RTT/delay} = a \cdot f(t \pm t_0)^b + c$$

wherein $T_{RTT/delay}$ describes the determined round trip time or delay time, wherein $a$, b, and $c$ describe the parameters signaled by the control information, wherein $t_0$ describes the time [e.g., system frame number or slot number] at which the parameters $a$, $b$, and c are signaled to the user equipment, and wherein t describes a certain [e.g., current] time at which the determined round trip time or delay time is valid.

In embodiments, the user equipment is configured to determine a timing advance for a certain [e.g., current] time [e.g., slot] based on the parameterized non-linear function [e.g., to determine a part of the timing advance [e.g., the common part of the timing advance] based on the parameterized non-linear function].

In embodiments, the user equipment is configured to time synchronize communications with the base station at the certain time based on the determined timing advance.

In embodiments, the non-linear function is

$$N_{TA,common} = N_{TA,cons} + \left\lfloor (n_{CurrentSlot} \pm n_0)^{N_{TA,power}} \times N_{TA,scale} \right\rfloor$$

wherein $N_{TA,common}$ describes the common timing advance in units of $T_C$, wherein $N_{TA,cons}$ can be obtained via a third parameter $c$ of the signaled parameters in units of $T_C$, wherein $N_{TA,power}$ can be obtained via a second parameter $b$ of the signaled parameters, wherein $N_{TA,scale}$ can be obtained via a first parameter $a$ of the signaled parameters in units of $T_C$ per unit of $n_0^b$, wherein $n_0$ describes the time [e.g., system frame number or slot number] at which the parameters $a$, $b$, and $c$ are signaled to the user equipment, and wherein $n_{CurrentSlot}$ describes a certain [e.g., current] time [e.g., system frame number or slot number] at which the determined timing advance is valid.

For example, the common timing advance is part of the timing advance, which further captures the effect of common/feeder link delay.

In embodiments, the non-linear function is

$$N_{TA,common} = N_{TA,cons} + \left\lfloor (n_{CurrentSlot} \pm n_0) \times N_{TA,driftRate}^{UE\ autonomous} \right\rfloor$$

$$N_{TA,driftRate}^{UE\ autonomous} = N_{TA,scale} \times N_{TA,power} \times (n_0)^{N_{TA,power}-1}$$

wherein $N_{TA,common}$ describes the common timing advance in units of $T_C$, wherein $N_{TA,cons}$ can be obtained via a third parameter c of the signaled parameters in units of $T_C$, wherein $N_{TA,power}$ can be obtained via a second parameter $b$ of the signaled parameters, wherein $N_{TA,scale}$ can be obtained via a first parameter $a$ of the signaled parameters, wherein $N_{TA,driftRate}^{UE\ autonomous}$ is the UE autonomously calculated drift rate in the units of $T_C$ per unit of $n_0$, wherein $n_0$ describes the reference time [e.g., system frame number or slot number] implicitly or explicitly indicated to the UE, and **wherein** $n_{CurrentSlot}$ describes a certain [e.g., current] time [e.g., system frame number or slot number] at which the determined timing advance is valid.

For example, the common timing advance is part of the timing advance, which further captures the effect of common/feeder link delay.

In embodiments, the at least one parameter is signaled in units of $T_C$ for determining the timing advance, wherein the user equipment is configured to convert the at least one parameter via $T_C$ into at least one converted parameter in absolute value, wherein the user equipment is configured to use the at least one converted parameter for at least one other procedure.

In embodiments, the at least one other procedure is at least one out of a calculation of a round trip time or delay time between the user equipment and the base station [e.g., for "drx-HARQ-RTT-TimerDL" or for a compensation of "ra-ResponseWindow" and "msgB-ResponseWindow].

In embodiments, the control information signals absolute parameters for parametrizing the non-linear function.

In embodiments, the control information signals an index of an entry [e.g., row] out of a plurality of entries of a table, each entry of the table having stored at least one parameter associated with a corresponding satellite out of a plurality of satellites of the communication system.

In embodiments, the user equipment is configured, in case of a handover to another satellite or a switch to another feeder link, to receive a further signaling information prior to the handover to the other satellite or switch to the other feeder link, the further signaling information describing at least one further parameter for parameterizing the non-linear function, the further parameterized non-linear function describing a course of a round trip time or delay after the handover to the other satellite or the switch to the other feeder link.

In embodiments, the control information signaling the at least one parameter is transmitted via a system information block.

In embodiments, the user equipment is configured to relay or re-transmit the signaling information signaling the at least one parameter to at least one other user equipment [e.g., unicast, multicast, groupcast or broadcast] of the wireless communication system via the sidelink.

In embodiments, the user equipment is configured to communicate with at least two satellites, wherein the user equipment is configured to receive, for each of the at least two satellites, a control information having a corresponding at least one parameter for parametrizing the non-linear function.

In embodiments, the user equipment is configured to communicate with the base station via the satellite using carrier aggregation.

In embodiments, the user equipment is configured to communicate with the base station via the satellite as supplementary uplink.

Further embodiments provide a base station [e.g., gNB] of a wireless communication system [e.g., 5G / new radio, NR], as defined in independent claim 9, wherein the base station is configured to communicate with an user equipment of the wireless communication system via a satellite of the wireless communication system, wherein the base station is configured to transmit to the user equipment via the satellite a control information, the control information signaling at least one parameter [e.g., one or more out of the parameters (a, b, c)] for parameterizing a non-linear function, the parameterized non-linear function [e.g., a parameterized version of the non-linear function] describing a course [e.g., variation] of a round trip time or delay time between

- the satellite and one out of the base station or satellite gateway of the wireless communication system,
- the satellite and a geographical reference point of the wireless communication system,
- a first reference point and a second reference point, the first reference point having a fixed relation [e.g., distance] to the satellite and the second reference point having a fixed relation [e.g., distance] to one out of the base station, satellite gateway or user equipment,

in dependence on a location of the satellite [e.g., with respect to the geographical reference point, the user equipment or a satellite gateway of the wireless communication system] [e.g., when the satellite is in range of the user equipment and/or satellite gateway].

In embodiments, the non non-linear function describes the course of the round trip time or delay time between the satellite and one out of the base station or satellite gateway, wherein the round trip time or delay time is a feeder link round trip time or feeder link delay time.

In embodiments, the non non-linear function describes the course of the round trip time or delay time between the satellite and the geographical reference point, wherein the round trip time or delay time is a common round trip time or common delay time.

In embodiments, the geographical reference point is located in one out of

- the base station,
- the satellite gateway,
- a feeder link between the satellite and one out of the satellite gateway or base station,
- a service link between the satellite and the user equipment or another user equipment of the wireless communication system or a certain point within a cell of the wireless communication system.

In embodiments, in case the geographical reference point is located at the feeder link, the control information further comprises an information describing a feeder link round trip time or delay time between the reference point and one out of the satellite gateway or base station.

In embodiments, in case the geographical reference point is located at the service link, the control information further comprises an information describing a feeder link round trip time or delay time between the satellite and one out of the satellite gateway or base station.

In embodiments, the parameterized non-linear function describes the course of the round trip time or delay time between the first reference point and the second reference point, wherein the control information further describes a [e.g., constant] portion of the round trip time or delay time between the base station and the satellite that is not described by the parameterized non-linear function [e.g., in case that the first reference point is not located at the satellite and/or the second reference point is not located at the base station].

In embodiments, the non-linear function is a power function or an exponential function or a polynomial function.

In embodiments, the non-linear function is

$$T_{RTT/delay} = a \cdot f(t \pm t_0)^b + c$$

wherein $T_{RTT/delay}$ describes the determined round trip time or delay time, wherein $a$, $b$, and $c$ describe the parameters signaled by the control information, wherein $t_0$ describes the time [e.g., system frame number or slot number] at which the parameters $a$, $b$, and $c$ are signaled to the user equipment, and wherein $t$ describes a certain [e.g., current] time at which the determined round trip time or delay time is valid.

In embodiments, the non-linear function is

$$N_{TA,common} = N_{TA,cons} + \left\lfloor (n_{CurrentSlot} \pm n_0)^{N_{TA,power}} \times N_{TA,scale} \right\rfloor$$

wherein $N_{TA,common}$ describes the common timing advance in units of $T_C$, wherein $N_{TA,cons}$ can be obtained via a third parameter c of the signaled parameters in units of $T_C$, wherein $N_{TA,power}$ can be obtained via a second parameter $b$ of the signaled parameters, wherein $N_{TA,scale}$ can be obtained via a first parameter $a$ of the signaled parameters in units of $T_C$ per unit of $n_0^b$, wherein $n_0$ describes the time [e.g., system frame number or slot number] at which the parameters $a$, $b$, and $c$ are signaled to the user equipment, and wherein $n_{CurrentSlot}$ describes a certain [e.g., current] time [e.g., system frame number or slot number] at which the determined timing advance is valid.

For example, the common timing advance is part of the timing advance, which further captures the effect of common/feeder link delay.

In embodiments, the non-linear function is

$$N_{TA,common} = N_{TA,cons} + \left\lfloor (n_{CurrentSlot} \mp n_0) \times N_{TA,driftRate}^{UE\ autonomous} \right\rfloor$$

$$N_{TA,driftRate}^{UE\ autonomous} = N_{TA,scale} \times N_{TA,power} \times (n_{CurrentSlot})^{N_{TA,power}-1}$$

wherein $N_{TA,common}$ describes the common timing advance in units of $T_C$, wherein $N_{TA,cons}$ can be obtained via a third parameter c of the signaled parameters in units of $T_C$, wherein $N_{TA,power}$ can be obtained via a second parameter $b$ of the signaled parameters, wherein $N_{TA,scale}$ can be obtained via a first parameter $a$ of the signaled parameters, wherein $N_{TA,driftRate}^{UE\ autonomous}$ is the UE autonomously calculated drift rate in the units of $T_C$ per unit of $n_0$, wherein $n_0$ describes the reference time [e.g., system frame number or slot number] indicated to the UE, and wherein $n_{CurrentSlot}$ describes a certain [e.g., current] time [e.g., system frame number or slot number] at which the determined timing advance is valid.

For example, the common timing advance is part of the timing advance, which further captures the effect of common/feeder link delay.

In embodiments, the control information signals absolute parameters for parametrizing the non-linear function.

In embodiments, the control information signals an index of an entry [e.g., row] of a table in which the corresponding parameters are stored [e.g., in the user equipment].

In embodiments, the control information signaling the at least one parameter is transmitted via a system information block.

Further embodiment provide a method for operating a user equipment of a wireless communication system [e.g., 5G / new radio, NR], as defined in independent claim 13.

The method comprises a step of receiving,

- from a base station of the wireless communication system via a satellite of the wireless communication system
- or from another user equipment of the wireless communication system via a sidelink,

a control information, the control information signaling at least one parameter [e.g., one or more out of the parameters (a, b, c)] for parameterizing a non-linear function, the parameterized non-linear function [e.g., a parameterized version of the non-linear function] describing a course [e.g., variation] of a round trip time or delay time between

- the satellite and one out of the base station or satellite gateway of the wireless communication system,
- the satellite and a geographical reference point of the wireless communication system,
- a first reference point and a second reference point, the first reference point having a fixed relation [e.g., distance] to the satellite and the second reference point having a fixed relation [e.g., distance] to one out of the base station, satellite gateway or user equipment,

in dependence on a location of the satellite [e.g., with respect to the geographical reference point, the user equipment or a satellite gateway of the wireless communication system] [e.g., when the satellite is in range of the user equipment and/or satellite gateway].

Further embodiments provide a method for operating a base station [e.g., gNB] of a wireless communication system [e.g., 5G / new radio, NR], as defined in independent claim 14. The method comprises a step of transmitting to a user equipment of the wireless communication system via a satellite of the wireless communication system a control information, the control information signaling at least one parameter [e.g., one or more out of the parameters (a, b, c)] for parameterizing a non-linear function, the parameterized non-linear function [e.g., a parameterized version of the non-linear function] describing a course [e.g., variation] of a round trip time or delay time between

- the satellite and one out of the base station or satellite gateway of the wireless communication system,
- the satellite and a geographical reference point of the wireless communication system,
- a first reference point and a second reference point, the first reference point having a fixed relation [e.g., distance] to the satellite and the second reference point having a fixed relation [e.g., distance] to one out of the base station, satellite gateway or user equipment,

in dependence on a location of the satellite [e.g., with respect to the geographical reference point, the user equipment or a satellite gateway of the wireless communication system] [e.g., when the satellite is in range of the user equipment and/or satellite gateway].

Subsequently, embodiments of the present invention are described in further detail.

As already indicated above, the end-to-end UE-gNB can be split into two parts: UE specific delay and UE common delay. In order to be able to understand the details of the signaling of the common delay, the UE common delay can be split into its constituent components. Furthermore, in the following, the terms RTT and delay are used interchangeably. In particular, given Fig. 6, the UE common delay/RTT can be written as follows:

$$\text{RTT}_{\text{UE-Common}} = \text{RTT}_{\text{gNB-GTW}} + \text{RTT}_{\text{GTW-Sat}} + T_{\text{Est.-Error}} = \text{RTT}_{\text{GTW-Sat}} + T_{\text{Constant}},$$

where

- $\text{RTT}_{\text{gNB-GTW}}$: captures the RTT of the gNB to gateway. Due to the fix locations of both gNB and gateway, $\text{RTT}_{\text{gNB-GTW}}$ is a constant.
- $T_{\text{Est.-Error}}$: accounts for the estimation error of UE specific delay/RTT. The value of this term depends on the accuracy of GNSS unit and can be considered to be constant.
- $\text{RTT}_{\text{GTW-Sat}}$: takes the delay/RTT of the gateway to the satellite into account. Due to the motion of the satellite, $\text{RTT}_{\text{GTW-Sat}}$ is a time-varying term. However, since the motion of the satellite is quasi-deterministic, i.e., predictive satellite orbital motion plus minor random box motion of the satellite, $\text{RTT}_{\text{GTW-Sat}}$ itself can be split into two terms. A deterministic and time-varying term plus a constant term accounting for estimation error of the RTT of gateway to satellite due to the box movement of the satellite.

Given the discussion above, $\text{RTT}_{\text{UE-Common}}$ can be well approximated via the right-hand-side of the equation above, i.e., $\text{RTT}_{\text{UE-Common}} = \text{RTT}_{\text{GTW-Sat}} + T_{\text{Constant}}$, where $T_{\text{Constant}}$ captures the effects of all constant terms and $\text{RTT}_{\text{GTW-Sat}}$ is the only time-varying and deterministic term.

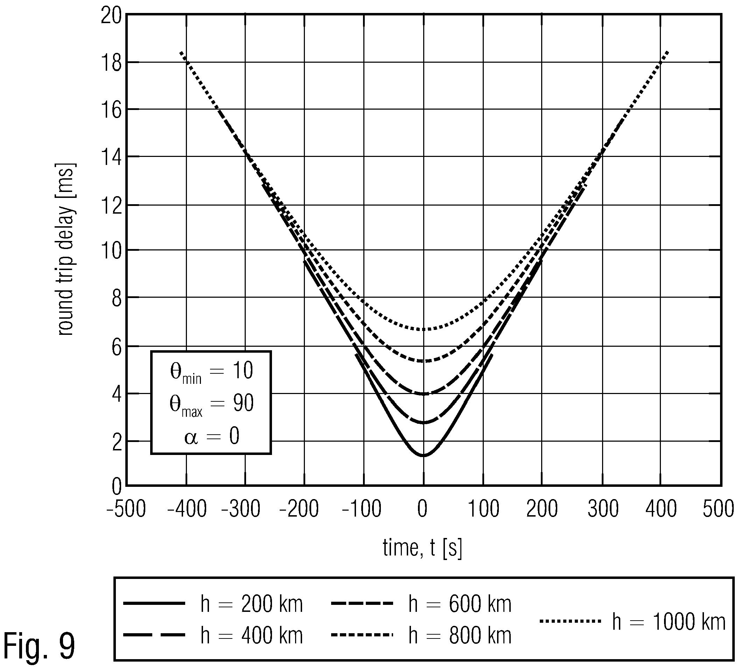

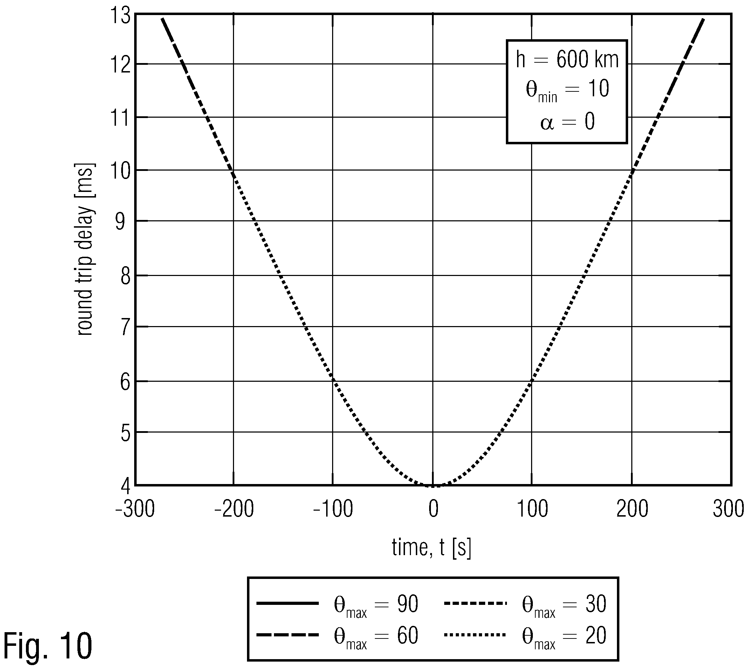

Before discussing the details of the signaling, it is worth to mention how $\text{RTT}_{\text{GTW-Sat}}$ can be evaluated. In particular, $RTT_{GTW-Sat}$ is a function of satellite altitude (h), minimum elevation angle ($\theta_{min}$), maximum elevation angle ($\theta_{max}$), and satellite orbit inclination ($\alpha$). Figs. 9 and 10 show $RTT_{GTW-Sat}$ for different system parameters.

In detail, in Fig. 9, the RTT from the gateway to the satellite, $RTT_{GTW-Sat}$, is plotted for different satellite altitudes. Thereby, the ordinate denote the RTT in ms, where the abscissa denotes the time in s. It can be observed that by increasing the altitude h, the visibility window of satellite at gateway increases. Furthermore, for all values of the altitude h, the "U" shape characteristic of $RTT_{GTW-Sat}$ is preserved.

In Fig. 10, the RTT from the gateway to the satellite, $RTT_{GTW-Sat}$, is plotted for different maximum elevation angles. Thereby, the ordinate denotes the RTT in ms, where the abscissa denotes the time in s. Similar to the previous analysis, it can be observed that different values of maximum elevation angles $\theta_{max}$ changes the visibility window of the satellite. However, the characteristic of the $RTT_{GTW-Sat}$ remains constant. Same observation with respect to behavior of $RTT_{GTW-Sat}$ has been made for different range of values of $\theta_{min}$ and also $\alpha$.

One important conclusion from the above simulation results is the $RTT_{GTW-Sat}$ shows a "U" shape characteristic. This particular characteristic can be employed for designing signaling mechanism with low signaling overhead.

Signaling mechanism

In embodiments the $RTT_{GTW-Sat}$ can be approximated as follows:

$$\mathrm{RTT_{UE-Common}} = \mathrm{RTT_{GTW-Sat}} + \mathrm{T_{Constant}} = a\,f(t \pm t_0)^b + c,$$

where a, b, and *c* are some constant values that can be obtained offline given the satellite orbit parameters and/or trajectory. Function *f(t)* is an arbitrary function that can best capture the characteristic of $RTT_{GTW-Sat}$:

- One example of function *f(t)* can be *f(t) = t*. This implies that $RTT_{GTW-Sat}$ can be potentially modelled as a power function, i.e.,

$$\mathrm{RTT_{UE-Common}} = \mathrm{RTT_{GTW-Sat}} + \mathrm{T_{Constant}} = a\,(t \pm t_0)^b + c$$

- Parameters *a, b,* and *c* can be obtained after parameter estimation.
- Parameter $t_0$ can be implicitly obtained by UE or explicitly signaled to the UE. For example, $t_0$ can be obtained from system frame number (SFN) and "timestamp" slot number in which parameters *a, b,* and c are signaled to the UE.

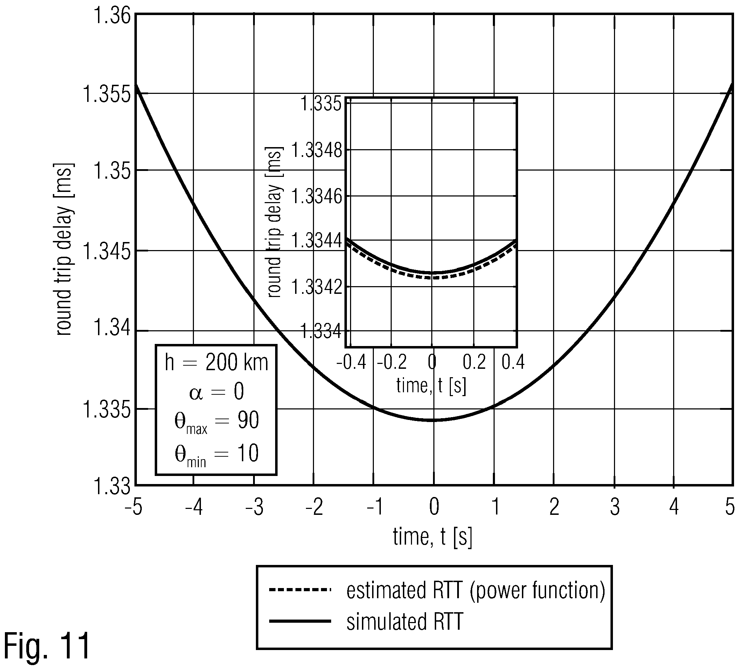

In order to assess the accuracy of the method proposed above, the same set of parameters are considered as in [4]. In Fig. 11, the common delay (RTT of feeder link) is plotted as a function of time for simulated RTT and estimated RTT via a power function. Thereby, the ordinate denotes the RTT in ms, where the abscissa denotes the time in s. The estimated parameters for this particular scenario are $a = 8.78 \times 10^{-7}$, $b = 1.9855$, $c = 0.0013$. It can be observed that the actual RTT curve can be well approximated with the power function with very high accuracy, compared to the piecewise linear approximation method. Furthermore, the signaling overhead is substantially reduced, compared with the piecewise linear approximation, since the estimated parameters can be calculated offline once and be used for a longer time, without a need for an update.

In the following, first, the details of the common delay signaling for the TA procedure are discussed. Second, further discussion is provided for the details of the signaling that are relevant for other procedures introduced above.

Timing Advance Procedure

For the timing advance mechanism, the following expression can be employed for calculation of autonomous TA for NTN UE [8]

$$T_{TA} = \left(N_{TA} + N_{TA,UE-specific} + N_{TA,common} + N_{TA,offset}\right) \times T_c,$$

where

- $T_c = 1/(48000 \times 4096)$,
- $N_{TA}$ and $N_{TA,offset}$ are defined as in Release-16. In particular, the value of $N_{TA,offset}$ is applied when transmitting PRACH preambles (before RRC connection) but $N_{TA} = 0$. After RRC connection, $N_{TA}$ is calculated via the TA command,

- $N_{TA,UE\text{-}specific}$ is UE self-estimated TA,
- $N_{TA,common}$ is network-controlled common TA, and may include any timing offset considered necessary by the network.

In the expression above, $N_{TA,UE\text{-}specific}$ is the parameter that is referred to as UE specific delay/RTT herein. Furthermore, $N_{TA,common}$ is the parameter that is referred to as UE common delay/RTT, $RTT_{UE\text{-}Common}$, herein and focused on for its signaling. For the TA procedure, $RTT_{UE\text{-}Common} = N_{TA,common} \times T_c$, and $N_{TA,common}$ has a unit of $T_c$. Thus, in embodiments, $N_{TA,common}$ can be determined as one out of the two following methods:

According to a first method, $N_{TA,common}$ can be determined according to:

$$N_{\text{TA,common}} = N_{\text{TA,cons}} + \lfloor (n_{\text{CurrentSlot}} \pm n_0)^{N_{\text{TA,power}}} \times N_{\text{TA,scale}} \rfloor,$$

where

- $N_{TA,cons}$ can be obtained via estimated parameter c, *in* $T_c$ unit,
- $N_{TA,power}$ can be obtained via estimated parameter b,
- $N_{TA,scale}$ can be obtained via estimated parameter *a,* in $T_c$ unit per unit of $n_0^b$ ,
- $n_{\text{CurrentSlot}}$ is the current uplink slot number,
- $n_0$ is the "timestamp" slot number in which $N_{TA,cons}$, $N_{TA,power}$, $N_{TA,driftRate}$ is signaled to the UE.

According to a second method, $N_{TA,common}$ can be determined according to:

$$N_{TA,common} = N_{TA,cons} + \lfloor (n_{CurrentSlot} \pm n_0) \times N_{TA,driftRate}^{UE\ autonomous} \rfloor$$

$$N_{TA,driftRate}^{UE\ autonomous} = N_{TA,scale} \times N_{TA,power} \times (n_0)^{N_{TA,power}-1}$$

where

- $N_{TA,cons}$ can be obtained via estimated parameter c, *in* $T_c$ unit,
- $N_{TA,power}$ can be obtained via estimated parameter b,
- $N_{TA,scale}$ can be obtained via estimated parameter *a,*
- $N_{TA,driftRate}^{UE\ autonomous}$ is (UE self estimated) UE autonomous calculated drift rate in $T_c$ unit per slot,
- $n_{\text{CurrentSlot}}$ is the current uplink slot number,
- $n_0$ is a reference slot number e.g., the "timestamp" slot number implicitly or explicitly signaled to the UE.

In NTN, and for Rel17, UE must calculate the timing advance value, and correspondingly, the common delay, before starting the RACH procedure, i.e., before sending the preamble (MSG1) via PRACH. By doing this, UE obtain time synchronization in its corresponding UL transmissions. As a result of this, the estimated parameters *a, b,* and *c* ($N_{TA,cons}$, $N_{TA,power}$, $N_{TA,scale}$ in case of TA procedure) must signal to UE before PRACH start.

In embodiments, the estimated parameters *a, b,* and *c* ($N_{TA,cons}$, $N_{TA,power}$, $N_{TA,scale}$ in case of TA procedure) can be broadcasted via system information block (SIB), e.g. SIB1 or any SIB dedicated to NTN.

Other Procedures

In the case of other procedures introduced in the beginning of this document, if the estimated parameters are signaled first for the TA procedure (in $T_c$ unit), UE can convert the estimated parameters into absolute values via $T_c$. Then, UE can employ the absolute values of estimated parameters for calculation of UE common delay, and consequently end-to-end UE-gNB delay, which is needed in other procedures.

Other Signaling Aspects

In the following, other relevant aspects of the common delay signaling are discussed.

According to a first aspect, the signaling method explained above is also valid for multiple UEs in a cell. Further, the signaling method explained above is also valid for one UE communicating with multiple satellites, and/or communicating via carrier aggregation, and/or communicating via supplementary uplink.

Thereby, for UEs in proximity, the signaling may also be distributed using the sidelink as direct communication link between UEs.

Further, in case of sidelink, either (1) broadcast (distributing the relevant information to all UEs in proximity) or (2) groupcast / multicast (distributing with a configured or spontaneous group of UEs, where one UE could serve as a group head responsible to distribute the satellite specific information), or (3) unicast (individual link to one nearby UE) may apply.

Further, in case of Uu, also multicast (group of UEs using satellite(s) for communication) may be used to distribute the satellite specific information (e.g. corrections of drifts).

According to a second aspect, since the satellite orbital motion is predictive, for a UE in a cell with fixed geographical location, and being served with multiple satellites, the estimated parameters $a_i$, $b_i$, and $c_i$ for the $i$th satellite, i = {1, 2, 3,···M}, where M is the total number of satellites, can be stored as ith row of a look-up table.

Thereby, the look-up table can be configured to the UE via RRC signaling.

Depending on the serving satellite, at a certain time, gNB can signal the corresponding index value of corresponding row of a look-up table.

According to a third aspect, all the discussions above are also valid for the case where instead of index signaling, the absolute value of estimated parameters are signaled to the UE.

According to a sixth aspect, for the hand-over procedure, the estimated parameters $a_{\text{new}}^{\text{sat}}$, $b_{\text{new}}^{\text{sat}}$, and $c_{\text{new}}^{\text{sat}}$ of the new satellite, that UE is going to hand-over to, is signaled via the current serving satellite before the hand-over procedure, or the corresponding index of $a_{\text{new}}^{\text{sat}}$, $b_{\text{new}}^{\text{sat}}$, and $c_{\text{new}}^{\text{sat}}$ is sent to the UE, if $a_{\text{new}}^{\text{sat}}$, $b_{\text{new}}^{\text{sat}}$, and $c_{\text{new}}^{\text{sat}}$ are stored in a look-up table.

According to a seventh aspect, in the event of feeder link switch, the estimated parameters $a_{\text{new}}^{\text{feeder}}$, $b_{\text{new}}^{\text{feeder}}$, and $c_{\text{new}}^{\text{feeder}}$, associated with the common delay experienced via the new/switched gateway in the feeder link, or its corresponding index in the look-up table are signaled to the UE before the feeder link switch occurs.

According to an eights aspect, all the methods mentioned above are also valid if UE is configured with multiple look-up tables, where each look-up table is configured for different procedures, and each row of a look-up table corresponds to a potential serving satellite.

Thereby, a signaling mechanism in which DCI information activates/de-activates one table out of a set of RRC configured look-up tables.

According to a ninth aspect, periodicity / frequency of report being exchanged: this may depend on any possible drift of the satellite or the moving speed and / or direction of the UE.

Further embodiments

Embodiments described herein may be implemented or used for several procedures (see below) in RAN1 and RAN2, which require enhancement for NTN depending on the round trip time (RTT) of UE and gNB.

As indicated above, UE-gNB RTT in NTN can be split into two parts namely, common RTT (or common delay) and UE specific RTT (or UE specific delay).

Thereby, the UE specific delay is the delay of UE to satellite, which can be acquired, for example, via UE GNSS unit and satellite ephemeris.

The common delay is common to all UEs. The common delay captures the delay of gNB-Gateway-Satellite (feeder-link).

Embodiments described herein may be implemented or used for procedures affected by UE-gNB RTT, such as one or more of the following:

- **RAN2:** 4-step RACH, 2-step RACH procedures,
- **RAN2:** drx-HARQ-RTT timers,
- **RAN1:** Timing advance procedure,
- **RAN1:** Feeder link switch procedure.

As indicated above, the common delay is under control of the network and must be signal to all UEs in the cell. Due to the motion of satellite, common delay is changing with time and requires frequent signaling from network side to UE to update the value of common delay. Embodiment provide a signaling mechanism of common delay with low signaling overhead.

In accordance with embodiments, the common delay (and Feeder link RTT), which has "U" shape character-

**EP 4 315 787 B1**

istics, is approximated with power functions, i.e., $at^b \pm c$ (see Fig. 11). Embodiments achieve very accurate approximation of RTT function. Signaling overhead can be substantially reduced, as only three parameters need to be signaled (*a, b, c*).

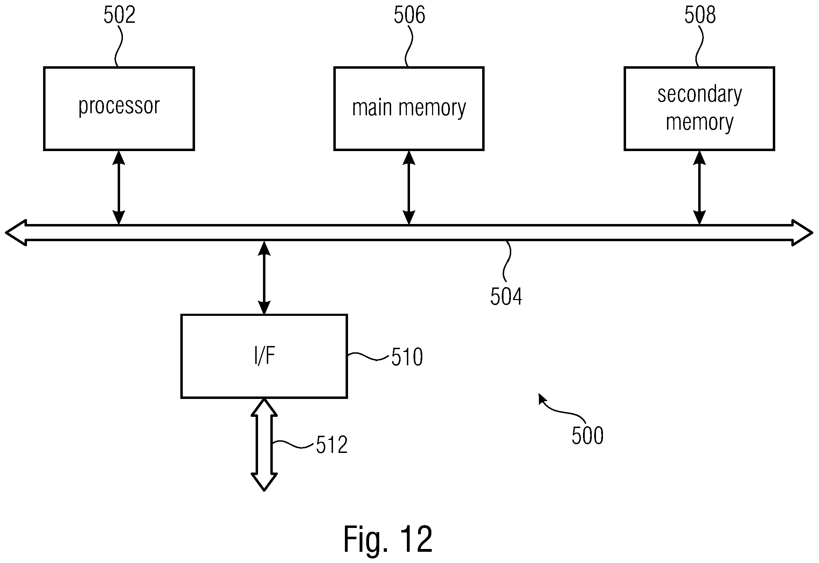

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 12 illustrates an example of a computer system 500. The units or modules as well as the steps of the methods performed by these units may execute on one or more computer systems 500. The computer system 500 includes one or more processors 502, like a special purpose or a general-purpose digital signal processor. The processor 502 is connected to a communication infrastructure 504, like a bus or a network. The computer system 500 includes a main memory 506, e.g., a random-access memory (RAM), and a secondary memory 508, e.g., a hard disk drive and/or a removable storage drive. The secondary memory 508 may allow computer programs or other instructions to be loaded into the computer system 500. The computer system 500 may further include a communications interface 510 to allow software and data to be transferred between computer system 500 and external devices. The communication may be in the form electronic, electromagnetic, optical, or other signals capable of being handled by a communications interface. The communication may use a wire or a cable, fiber optics, a phone line, a cellular phone link, an RF link and other communications channels 512.

The terms "computer program medium" and "computer readable medium" are used to generally refer to tangible storage media such as removable storage units or a hard disk installed in a hard disk drive. These computer program products are means for providing software to the computer system 500. The computer programs, also referred to as computer control logic, are stored in main memory 506 and/or secondary memory 508. Computer programs may also be received via the communications interface 510. The computer program, when executed, enables the computer system 500 to implement the present invention. In particular, the computer program, when executed, enables processor 502 to implement the processes of the present invention, such as any of the methods described herein. Accordingly, such a computer program may represent a controller of the computer system 500. Where the disclosure is implemented using software, the software may be stored in a computer program product and loaded into computer system 500 using a removable storage drive, an interface, like communications interface 510.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine-readable carrier.

Other embodiments comprise the computer program for performing one of the methods described herein, stored on a machine-readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

[1] 3GPP TR 38.811, "Study on New Radio (NR) to support non terrestrial networks (Release 15)," 3rd Generation Partnership Project; Technical Specification Group Radio Access Network, Version 15.1.0, June 2019.

[2] 3GPP TR 38.821 v16.0.0 (2019-12): 3rd Generation Partnership Project; Technical Specification Group Radio Access Network; Solutions for NR to support non-terrestrial networks (NTN) (Release 16).

[3] US 2020/0196263 A1

[4] R1-2100927, "On UL time and frequency synchronization enhancements for NTN", Ericsson, Jan. 2021.

[5] R2-2010702, "Report from Break-out session on R16 eMIMO, CLI, PRN, RACS and R17 NTN and REDCAP", Nov. 2020.

[6] R2-2101952, "Report from Break-out session on R16 eMIMO, CLI, PRN, RACS and R17 NTN and REDCAP", Jan. 2021.

[7] 3GPP TSG RAN WG1 Meeting #104-e, "RAN1 Chairman's Notes", Jan. 2021.

[8] 3GPP TSG RAN WG1 Meeting #104-e, "RAN1 Chairman's Notes 8.4 v005", Jan. 2021.

Abbreviations

| | |
|---|---|
| 3GPP | third generation partnership project |
| AIM | assistance information message |
| AL | alert limit |
| AMF | access and mobility management function |
| ARAIM | advanced receiver autonomous integrity monitoring |
| BS | base station |
| BWP | bandwidth part |
| CA | carrier aggregation |
| CC | component carrier |
| CBG | code block group |
| CBR | channel busy ratio |
| D2D | device-to-device |
| DAI | downlink assignment index |
| DCI | downlink control information |
| DL | downlink |
| FFT | fast Fourier transform |
| GMLC | gateway mobile location center |
| gNB | evolved node B (NR base station) / next generation node B base station |
| GNSS | global navigation satellite system |
| GTW | gateway |
| HAL | horizontal alert limit |
| HARQ | hybrid automatic repeat request |
| IoT | internet of things |
| LCS | location services |
| LEO | low earth orbiter |
| LMF | location management function |
| LPP | LTE positioning protocol |
| LTE | long-term evolution |
| MAC | medium access control |
| MCR | minimum communication range |
| MCS | modulation and coding scheme |
| MIB | master information block |
| MO-LR | mobile originated location request |
| MT-LR | mobile terminated location request |
| NB | node B |
| NI-LR | network induced location request |
| NR | new radio |
| NRPPa | NR positioning protocol-annex |

NTN       non-terrestrial network
NW        network
OFDM      orthogonal frequency-division multiplexing
OFDMA     orthogonal frequency-division multiple access
PBCH      physical broadcast channel
PC5       interface using the sidelink channel for D2D communication
PDCCH     physical downlink control channel
PDSCH     physical downlink shared channel
PL        protection level
PLMN      public land mobile network
PPP       point-to-point protocol
PPP       precise point positioning
PRACH     physical random access channel
PRB       physical resource block
PRS       public regulated services (Galileo)
PSCCH     physical sidelink control channel
PSSCH     physical sidelink shared channel
PUCCH     physical uplink control channel
PUSCH     physical uplink shared channel
PVT       position and/or velocity and/or time
PVT       position, velocity and time
RAIM      receiver autonomous integrity monitoring
RAN       radio access networks
RAT       radio access technology
RB        resource block
RNTI      radio network temporary identifier
RP        reference point
RRC       radio resource control
RS        reference symbols/signal
RTK       real time kinematics
RTT       round trip time
Sat       satellite
SBAS      space-based augmentation systems

## Claims

1. User equipment ($302_1$) of a wireless communication system,

   wherein the user equipment ($302_1$) is configured to communicate with a base station (300) of the wireless communication system via a satellite (304) of the wireless communication system,
   wherein the user equipment ($302_1$) is configured to receive, from the base station (300) via the satellite (304) or from another user equipment ($302_2$) of the wireless communication system via a sidelink, a control information, the control information signaling parameters for parameterizing a non-linear function, the parameterized non-linear function describing a course of a round trip time or delay time between

   - the satellite (304) and one out of the base station (300) or satellite gateway of the wireless communication system, or
   - the satellite (304) and a geographical reference point of the wireless communication system, or
   - a first reference point and a second reference point, the first reference point having a fixed relation to the satellite (304) and the second reference point having a fixed relation to one out of the base station (300), satellite gateway or user equipment ($302_1$),

   in dependence on a location of the satellite (304),
   wherein the user equipment ($302_1$) is configured to time synchronize communications with the base station (300) using the parameterized non-linear function.

2. User equipment ($302_1$) according to claim 1,

wherein the user equipment ($302_1$) is configured to determine a round trip time or delay time for a certain time using the parameterized non-linear function,

wherein the user equipment ($302_1$) is configured to time synchronize communications with the base station (300) at the certain time based on the determined round trip time or delay time.

3. User equipment ($302_1$) according to one of the claims 1 to 2,

wherein the non non-linear function describes the course of the round trip time or delay time between the satellite (304) and one out of the base station (300) or satellite gateway, wherein the round trip time or delay time is a feeder link round trip time or feeder link delay time,

or wherein the non non-linear function describes the course of the round trip time or delay time between the satellite (304) and the geographical reference point, wherein the round trip time or delay time is a common round trip time or common delay time,

or wherein the parameterized non-linear function describes the course of the round trip time or delay time between the first reference point and the second reference point, wherein the control information further describes a portion of the round trip time or delay time between the base station (300) and the satellite (304) that is not described by the parameterized non-linear function.

4. User equipment ($302_1$) according to claim 3,
   wherein the user equipment ($302_1$) is configured to time synchronize communications with the base station (300) further using the portion of the round trip time or delay time that is not described by the parameterized non-linear function.

5. User equipment ($302_1$) according to one of the claims 1 to 4,

wherein the non-linear function is a power function or an exponential function or a polynomial function;
or wherein the non-linear function is

$$T_{RTT/delay} = a \cdot f(t \pm t_0)^b + c$$

wherein $T_{RTT/delay}$ describes the determined round trip time or delay time, wherein *a, b,* and *c* describe the parameters signaled by the control information, wherein $t_0$ describes the time at which the parameters *a, b,* and *c* are signaled to the user equipment ($302_1$), and wherein *t* describes a certain time at which the determined round trip time or delay time is valid;
or wherein the non-linear function is

$$N_{TA,common} = N_{TA,cons} + \left\lfloor (n_{CurrentSlot} \pm n_0)^{N_{TA,power}} \times N_{TA,scale} \right\rfloor$$

wherein $N_{TA,common}$ describes the common timing advance in units of $T_C$, wherein $N_{TA,cons}$ can be obtained via a third parameter c of the signaled parameters in units of $T_C$, wherein $N_{TA,power}$ can be obtained via a second parameter *b* of the signaled parameters, wherein $N_{TA,scale}$ can be obtained via a first parameter *a* of the signaled parameters in units of $T_C$ per unit of $n_0^b$, wherein $n_0$ describes the time at which the parameters a, b, and *c* are signaled $t_0$ the user equipment, and wherein $n_{CurrentSlot}$ describes a certain time at which the determined timing advance is valid;
or wherein the non-linear function is

$$N_{TA,common} = N_{TA,cons} + \left\lfloor (n_{CurrentSlot} \pm n_0) \times N_{TA,driftRate}^{UE\ autonomous} \right\rfloor$$

$$N_{TA,driftRate}^{UE\ autonomous} = N_{TA,scale} \times N_{TA,power} \times (n_0)^{N_{TA,power}-1}$$

wherein $N_{TA,common}$ describes the common timing advance in units of $T_C$, wherein $N_{TA,cons}$ can be obtained via a third parameter c of the signaled parameters in units of $T_C$, wherein $N_{TA,power}$ can be obtained via a second parameter *b* of the signaled parameters, wherein $N_{TA,scale}$ can be obtained via a first parameter a of the signaled parameters, wherein $N_{TA,driftRate}^{UE\ autonomous}$ is the UE autonomously calculated drift rate in the units of $T_C$ per unit of $n_0$, wherein $n_0$ describes the reference time implicitly or explicitly indicated to the UE, and wherein $n_{CurrentSlot}$ describes a certain time at which the determined timing advance is valid.

6. User equipment ($302_1$) according to one of the claims 1 to 5,
wherein the user equipment ($302_1$) is configured to determine a timing advance for a certain time based on the parameterized non-linear function.

7. User equipment ($302_1$) according to one of the claims 1 to 6,

wherein control information signals absolute parameters for parametrizing the non-linear function,
or wherein the control information signals an index of an entry out of a plurality of entries of a table, each entry of the table having stored at least one parameter associated with a corresponding satellite out of a plurality of satellites of the communication system,
or wherein the control information signaling the at least one parameter is transmitted via a system information block.

8. User equipment ($302_1$) according to one of the claims 1 to 7,

wherein the user equipment ($302_1$) is configured, in case of a handover to another satellite or a switch to another feeder link, to receive a further signaling information prior to the handover to the other satellite or switch to the other feeder link, the further signaling information describing at least one further parameter for parameterizing the non-linear function, the further parameterized non-linear function describing a course of a round trip time or delay after the handover to the other satellite or the switch to the other feeder link,
or wherein the user equipment ($302_1$) is configured to relay or re-transmit the signaling information signaling the at least one parameter to at least one other user equipment ($302_2$) of the wireless communication system via the sidelink,
or wherein the user equipment ($302_1$) is configured to communicate with at least two satellites, wherein the user equipment ($302_1$) is configured to receive, for each of the at least two satellites, a control information having a corresponding at least one parameter for parametrizing the non-linear function,
or wherein user equipment ($302_1$) is configured to communicate with the base station (300) via the satellite (304) using carrier aggregation,
or wherein user equipment ($302_1$) is configured to communicate with the base station (300) via the satellite (304) as supplementary uplink.

9. Base station (300) of a wireless communication system,

wherein the base station (300) is configured to communicate with an user equipment ($302_1$) of the wireless communication system via a satellite (304) of the wireless communication system,
wherein the base station (300) is configured to transmit to the user equipment ($302_1$) via the satellite (304) a control information, the control information signaling parameters for parameterizing a non-linear function, the parameterized non-linear function describing a course of a round trip time or delay time between

- the satellite (304) and one out of the base station (300) or satellite gateway of the wireless communication system, or
- the satellite (304) and a geographical reference point of the wireless communication system, or
- a first reference point and a second reference point, the first reference point having a fixed relation to the satellite and the second reference point having a fixed relation to one out of the base station (300), satellite gateway or user equipment ($302_1$),

in dependence on a location of the satellite (304), wherein the user equipment (302i) is configured to time synchronize communications with the base station (300) using the parameterized non-linear function.

10. Base station (300) according to claim 9,

wherein the non non-linear function describes the course of the round trip time or delay time between the satellite (304) and one out of the base station (300) or satellite gateway, wherein the round trip time or delay time is a feeder link round trip time or feeder link delay time,

or wherein the non non-linear function describes the course of the round trip time or delay time between the satellite (3049 and the geographical reference point, wherein the round trip time or delay time is a common round trip time or common delay time,

or wherein the parameterized non-linear function describes the course of the round trip time or delay time between the first reference point and the second reference point, wherein the control information further describes a portion of the round trip time or delay time between the base station (300) and the satellite (3049 that is not described by the parameterized non-linear function.

**11.** Base station (300) according to one of the claim 9 to 10,

wherein the non-linear function is a power function or an exponential function or a polynomial function;
or wherein the non-linear function is

$$T_{RTT/delay} = a \cdot f(t \pm t_0)^b + c$$

wherein $T_{RTT/delay}$ describes the determined round trip time or delay time, wherein $a$, $b$, and $c$ describe the parameters signaled by the control information, wherein $t_0$ describes the time at which the parameters $a$, $b$, and $c$ are signaled to the user equipment ($302_1$), and wherein $t$ describes a certain time at which the determined round trip time or delay time is valid;
or wherein the non-linear function is

$$N_{TA,common} = N_{TA,cons} + \left\lfloor (n_{CurrentSlot} \pm n_0)^{N_{TA,power}} \times N_{TA,scale} \right\rfloor$$

wherein $N_{TA,common}$ describes the common timing advance in units of $T_C$, wherein $N_{TA,cons}$ can be obtained via a third parameter c of the signaled parameters in units of $T_C$, wherein $N_{TA,power}$ can be obtained via a second parameter b of the signaled parameters, wherein $N_{TA,scale}$ can be obtained via a first parameter $a$ of the signaled parameters in units of $T_C$ per unit of $n_0^b$, wherein $n_0$ describes the time at which the parameters $a$, $b$, and $c$ are signaled to the user equipment ($302_1$), and wherein $n_{CurrentSlot}$ describes a certain time at which the determined timing advance is valid;
or wherein the non-linear function is

$$N_{TA,common} = N_{TA,cons} + \left\lfloor (n_{CurrentSlot} \mp n_0) \times N_{TA,driftRate}^{UE\ autonomous} \right\rfloor$$

$$N_{TA,driftRate}^{UE\ autonomous} = N_{TA,scale} \times N_{TA,power} \times (n_{CurrentSlot})^{N_{TA,power}-1}$$

wherein $N_{TA,common}$ describes the common timing advance in units of $T_C$, wherein $N_{TA,cons}$ can be obtained via a third parameter $c$ of the signaled parameters in units of $T_C$, wherein $N_{TA,power}$ can be obtained via a second parameter $b$ of the signaled parameters, wherein $N_{TA,scale}$ can be obtained via a first parameter $a$ of the signaled parameters, wherein $N_{TA,driftRate}^{UE\ autonomous}$ is the UE autonomously calculated drift rate in the units of $T_C$ per unit of $n_0$, wherein $n_0$ describes the reference time indicated to the UE, and **wherein** $n_{CurrentSlot}$ describes a certain time at which the determined timing advance is valid.

**12.** Base station (300) according to one of the claim 9 to 11,

wherein control information signals absolute parameters for parametrizing the non-linear function,
or wherein the control information signals an index of an entry of a table in which the corresponding parameters are stored,
or wherein the control information signaling the at least one parameter is transmitted via a system information block.

**13.** Method for operating a user equipment ($302_1$) of a wireless communication system, the method comprising:

receiving,

- from a base station (300) of the wireless communication system via a satellite (3049 of the wireless communication system
- or from another user equipment (302$_2$) of the wireless communication system via a sidelink,

a control information, the control information signaling parameters for parameterizing a non-linear function, the parameterized non-linear function describing a course of a round trip time or delay time between

- the satellite (304) and one out of the base station (300) or satellite gateway of the wireless communication system, or
- the satellite (304) and a geographical reference point of the wireless communication system, or
- a first reference point and a second reference point, the first reference point having a fixed relation to the satellite and the second reference point having a fixed relation to one out of the base station (300), satellite gateway or user equipment (302$_1$),

in dependence on a location of the satellite (304),
wherein time synchronizing communications with the base station (300) using the parameterized non-linear function.

14. Method for operating a base station (300) of a wireless communication system, the method comprising:

transmitting to a user equipment (302$_1$) of the wireless communication system via a satellite (304) of the wireless communication system a control information, the control information signaling parameters for parameterizing a non-linear function, the parameterized non-linear function describing a course of a round trip time or delay time between

- the satellite (304) and one out of the base station (300) or satellite gateway of the wireless communication system, or
- the satellite (304) and a geographical reference point of the wireless communication system, or
- a first reference point and a second reference point, the first reference point having a fixed relation to the satellite and the second reference point having a fixed relation to one out of the base station (300), satellite gateway or user equipment (302$_1$),

in dependence on a location of the satellite (304), wherein the user equipment (302i) time synchronizes communications with the base station (300) using the parameterized non-linear function.

15. Computer program comprising instructions which, when the program is executed by a computer, cause the computer to carry out the method according to claim 13 or 14.

**Patentansprüche**

1. Nutzergerät (302$_1$) eines Drahtloskommunikationssystems,

wobei das Nutzergerät (302$_1$) dazu konfiguriert ist, über einen Satelliten (304) des Drahtloskommunikationssystems mit einer Basisstation (300) des Drahtloskommunikationssystems zu kommunizieren,
wobei das Nutzergerät (302$_1$) dazu konfiguriert ist, von der Basisstation (300) über den Satelliten (304) oder von einem anderen Nutzergerät (302$_2$) des Drahtloskommunikationssystems über einen Sidelink Steuerinformationen zu empfangen, wobei die Steuerinformationen Parameter zum Parametrisieren einer nichtlinearen Funktion signalisieren, wobei die parametrisierte nichtlineare Funktion einen Verlauf einer Umlaufzeit oder Verzögerungszeit zwischen

- dem Satelliten (304) und entweder der Basisstation (300) oder dem Satelliten-Gateway des Drahtloskommunikationssystems, oder
- dem Satelliten (304) und einem geografischen Referenzpunkt des Drahtloskommunikationssystems, oder
- einem ersten Referenzpunkt und einem zweiten Referenzpunkt, wobei der erste Referenzpunkt eine feste Beziehung zu dem Satelliten (304) aufweist und der zweite Referenzpunkt eine feste Beziehung zu entweder der Basisstation (300), dem Satelliten-Gateway oder dem Nutzergerät ($302_1$) aufweist,

in Abhängigkeit von einem Standort des Satelliten (304) beschreibt,
wobei das Nutzergerät ($302_1$) dazu konfiguriert ist, Kommunikationen mit der Basisstation (300) unter Verwendung der parametrisierten nichtlinearen Funktion zeitlich zu synchronisieren.

2.  Nutzergerät ($302_1$) gemäß Anspruch 1,

wobei das Nutzergerät ($302_1$) dazu konfiguriert ist, eine Umlaufzeit oder Verzögerungszeit für eine bestimmte Zeit unter Verwendung der parametrisierten nichtlinearen Funktion zu bestimmen,
wobei das Nutzergerät ($302_1$) dazu konfiguriert ist, Kommunikationen mit der Basisstation (300) zu der bestimmten Zeit basierend auf der bestimmten Umlaufzeit oder Verzögerungszeit zeitlich zu synchronisieren.

3.  Nutzergerät ($302_1$) gemäß einem der Ansprüche 1 bis 2,

wobei die nichtlineare Funktion den Verlauf der Umlaufzeit oder Verzögerungszeit zwischen dem Satelliten (304) und entweder der Basisstation (300) oder dem Satelliten-Gateway beschreibt, wobei die Umlaufzeit oder Verzögerungszeit eine Feeder-Link-Umlaufzeit oder Feeder-Link-Verzögerungszeit ist,
oder wobei die nichtlineare Funktion den Verlauf der Umlaufzeit oder Verzögerungszeit zwischen dem Satelliten (304) und dem geografischen Referenzpunkt beschreibt, wobei die Umlaufzeit oder Verzögerungszeit eine gemeinsame Umlaufzeit oder gemeinsame Verzögerungszeit ist,
oder wobei die parametrisierte nichtlineare Funktion den Verlauf der Umlaufzeit oder Verzögerungszeit zwischen dem ersten Referenzpunkt und dem zweiten Referenzpunkt beschreibt, wobei die Steuerinformationen ferner einen Abschnitt der Umlaufzeit oder Verzögerungszeit zwischen der Basisstation (300) und dem Satelliten (304) beschreiben, der nicht durch die parametrisierte nichtlineare Funktion beschrieben wird.

4.  Nutzergerät ($302_1$) gemäß Anspruch 3,
    wobei das Nutzergerät ($302_1$) dazu konfiguriert ist, Kommunikationen mit der Basisstation (300) ferner unter Verwendung des Abschnitts der Umlaufzeit oder Verzögerungszeit, der nicht durch die parametrisierte nichtlineare Funktion beschrieben wird, zeitlich zu synchronisieren.

5.  Nutzergerät ($302_1$) gemäß einem der Ansprüche 1 bis 4,

wobei die nichtlineare Funktion eine Potenzfunktion oder eine Exponentialfunktion oder eine Polynomfunktion ist;
oder wobei die nichtlineare Funktion wie folgt ist:

$$T_{RTT/delay} = a \cdot f(t \pm t_0)^b + c$$

wobei $T_{RTT/delay}$ die bestimmte Umlaufzeit oder Verzögerungszeit beschreibt, wobei *a, b und c* die Parameter beschreiben, die durch die Steuerinformationen signalisiert werden, wobei $t_0$ die Zeit beschreibt, zu der die Parameter *a, b* und *c* an das Nutzergerät ($302_1$) signalisiert werden, und wobei *t* eine bestimmte Zeit beschreibt, zu der die bestimmte Umlaufzeit oder Verzögerungszeit gültig ist;
oder wobei die nichtlineare Funktion wie folgt ist:

$$N_{TA,common} = N_{TA,cons} + \left\lfloor (n_{CurrentSlot} \pm n_0)^{N_{TA,power}} \times N_{TA,scale} \right\rfloor$$

**wobei** $N_{TA,common}$ den gemeinsamen Zeitvorlauf in Einheiten von $T_C$ beschreibt, wobei $N_{TA,cons}$ über einen dritten Parameter *c* der signalisierten Parameter in Einheiten von $T_C$ erhalten werden kann, wobei $N_{TA,power}$ über einen zweiten Parameter *b* der signalisierten Parameter erhalten werden kann, wobei $N_{TA,scale}$ über einen ersten Parameter *a* der signalisierten Parameter in Einheiten von $T_C$ pro Einheit von $n_0^b$ erhalten werden kann, wobei $n_0$ die Zeit beschreibt, zu der die Parameter *a, b* und *c* an das Nutzergerät signalisiert werden, und wobei $n_{CurrentSlot}$ eine bestimmte Zeit beschreibt, zu der der bestimmte Zeitvorlauf gültig ist;
oder wobei die nichtlineare Funktion wie folgt ist:

$$N_{TA,common} = N_{TA,cons} + \left\lfloor (n_{CurrentSlot} \pm n_0) \times N_{TA,driftRate}^{UE\ autonomous} \right\rfloor$$

$$N_{TA,driftRate}^{UE\ autonomous} = N_{TA,scale} \times N_{TA,power} \times (n_0)^{N_{TA,power}-1}$$

wobei $N_{TA,common}$ den gemeinsamen Zeitvorlauf in Einheiten von $T_C$ beschreibt, wobei $N_{TA,cons}$ über einen dritten Parameter $c$ der signalisierten Parameter in Einheiten von $T_C$ erhalten werden kann, wobei $N_{TA,power}$ über einen zweiten Parameter $b$ der signalisierten Parameter erhalten werden kann, wobei $N_{TA,scale}$ über einen ersten Parameter $a$ der signalisierten Parameter erhalten werden kann, wobei $N_{TA,driftRate}^{UE\ autonomous}$ die autonom berechnete UE-Driftrate in den Einheiten von $T_C$ pro Einheit von $n_0$ ist, wobei $n_0$ die Referenzzeit beschreibt, die dem UE implizit oder explizit angezeigt wird, und wobei $n_{CurrentSlot}$ eine bestimmte Zeit beschreibt, zu der der bestimmte Zeitvorlauf gültig ist.

6. Nutzergerät ($302_1$) gemäß einem der Ansprüche 1 bis 5,
wobei das Nutzergerät ($302_1$) dazu konfiguriert ist, einen Zeitvorlauf für eine bestimmte Zeit basierend auf der parametrisierten nichtlinearen Funktion zu bestimmen.

7. Nutzergerät ($302_1$) gemäß einem der Ansprüche 1 bis 6,

wobei die Steuerinformationen absolute Parameter zum Parametrisieren der nichtlinearen Funktion signalisieren,
oder wobei die Steuerinformationen einen Index eines Eintrags aus einer Mehrzahl von Einträgen einer Tabelle signalisieren, wobei in jedem Eintrag der Tabelle zumindest ein Parameter gespeichert ist, der einem entsprechenden Satelliten aus einer Mehrzahl von Satelliten des Kommunikationssystems zugeordnet ist,
oder wobei die Steuerinformationen, die den zumindest einen Parameter signalisieren, über einen Systeminformationsblock übertragen werden.

8. Nutzergerät ($302_1$) gemäß einem der Ansprüche 1 bis 7,

wobei das Nutzergerät ($302_1$) dazu konfiguriert ist, im Fall einer Übergabe an einen anderen Satelliten oder eines Wechsels zu einem anderen Feeder-Link weitere Signalisierungsinformationen vor der Übergabe zu dem anderen Satelliten oder dem Wechsel zu dem anderen Feeder-Link zu empfangen, wobei die weiteren Signalisierungsinformationen zumindest einen weiteren Parameter zum Parametrisieren der nichtlinearen Funktion beschreiben, wobei die weitere parametrisierte nichtlineare Funktion einen Verlauf einer Umlaufzeit oder Verzögerung nach der Übergabe zu dem anderen Satelliten oder dem Wechsel zu dem anderen Feeder-Link beschreibt,
oder wobei das Nutzergerät ($302_1$) dazu konfiguriert ist, die Signalisierungsinformationen, die den zumindest einen Parameter signalisieren, an zumindest ein anderes Nutzergerät ($302_2$) des Drahtloskommunikationssystems über den Sidelink weiterzuleiten oder erneut zu übertragen,
oder wobei das Nutzergerät ($302_1$) dazu konfiguriert ist, mit zumindest zwei Satelliten zu kommunizieren, wobei das Nutzergerät ($302_1$) dazu konfiguriert ist, für jeden der zumindest zwei Satelliten Steuerinformationen mit einem entsprechenden zumindest einen Parameter zum Parametrisieren der nichtlinearen Funktion zu empfangen,
oder wobei das Nutzergerät ($302_1$) dazu konfiguriert ist, über den Satelliten (304) unter Verwendung von Trägeraggregation mit der Basisstation (300) zu kommunizieren,
oder wobei das Nutzergerät ($302_1$) dazu konfiguriert ist, über den Satelliten (304) als zusätzlichen Uplink mit der Basisstation (300) zu kommunizieren.

9. Basisstation (300) eines Drahtloskommunikationssystems,

wobei die Basisstation (300) dazu konfiguriert ist, über einen Satelliten (304) des Drahtloskommunikationssystems mit einem Nutzergerät ($302_1$) des Drahtloskommunikationssystems zu kommunizieren,
wobei die Basisstation (300) dazu konfiguriert ist, über den Satelliten (304) Steuerinformationen an das Nutzergerät ($302_1$) zu übertragen, wobei die Steuerinformationen Parameter zum Parametrisieren einer nichtlinearen Funktion signalisieren, wobei die parametrisierte nichtlineare Funktion einen Verlauf einer Umlaufzeit oder Verzögerungszeit zwischen

- dem Satelliten (304) und entweder der Basisstation (300) oder dem Satelliten-Gateway des Drahtloskommunikationssystems, oder
- dem Satelliten (304) und einem geografischen Referenzpunkt des Drahtloskommunikationssystems, oder
- einem ersten Referenzpunkt und einem zweiten Referenzpunkt, wobei der erste Referenzpunkt eine feste Beziehung zu dem Satelliten aufweist und der zweite Referenzpunkt eine feste Beziehung zu entweder der Basisstation (300), dem Satelliten-Gateway oder dem Nutzergerät ($302_1$) aufweist,

in Abhängigkeit von einem Standort des Satelliten (304) beschreibt,
wobei das Nutzergerät ($302_1$) dazu konfiguriert ist, Kommunikationen mit der Basisstation (300) unter Verwendung der parametrisierten nichtlinearen Funktion zeitlich zu synchronisieren.

10. Basisstation (300) gemäß Anspruch 9,

wobei die nichtlineare Funktion den Verlauf der Umlaufzeit oder Verzögerungszeit zwischen dem Satelliten (304) und entweder der Basisstation (300) oder dem Satelliten-Gateway beschreibt, wobei die Umlaufzeit oder Verzögerungszeit eine Feeder-Link-Umlaufzeit oder Feeder-Link-Verzögerungszeit ist,
oder wobei die nichtlineare Funktion den Verlauf der Umlaufzeit oder Verzögerungszeit zwischen dem Satelliten (3049 und dem geografischen Referenzpunkt beschreibt, wobei die Umlaufzeit oder Verzögerungszeit eine gemeinsame Umlaufzeit oder gemeinsame Verzögerungszeit ist,
oder wobei die parametrisierte nichtlineare Funktion den Verlauf der Umlaufzeit oder Verzögerungszeit zwischen dem ersten Referenzpunkt und dem zweiten Referenzpunkt beschreibt, wobei die Steuerinformationen ferner einen Abschnitt der Umlaufzeit oder Verzögerungszeit zwischen der Basisstation (300) und dem Satelliten (3049 beschreiben, der nicht durch die parametrisierte nichtlineare Funktion beschrieben wird.

11. Basisstation (300) gemäß einem der Ansprüche 9 bis 10,

wobei die nichtlineare Funktion eine Potenzfunktion oder eine Exponentialfunktion oder eine Polynomfunktion ist;
oder wobei die nichtlineare Funktion wie folgt ist:

$$T_{RTT/delay} = a \cdot f(t \pm t_0)^b + c$$

wobei $T_{RTT/delay}$ die bestimmte Umlaufzeit oder Verzögerungszeit beschreibt, wobei *a*, b und c die Parameter beschreiben, die durch die Steuerinformationen signalisiert werden, wobei $t_0$ die Zeit beschreibt, zu der die Parameter *a, b und c* an das Nutzergerät ($302_1$) signalisiert werden, und wobei *t* eine bestimmte Zeit beschreibt, zu der die bestimmte Umlaufzeit oder Verzögerungszeit gültig ist;
oder wobei die nichtlineare Funktion wie folgt ist:

$$N_{TA,common} = N_{TA,cons} + \left\lfloor (n_{CurrentSlot} \pm n_0)^{N_{TA,power}} \times N_{TA,scale} \right\rfloor$$

**wobei** $N_{TA,common}$ den gemeinsamen Zeitvorlauf in Einheiten von $T_C$ beschreibt, wobei $N_{TA,cons}$ über einen dritten Parameter *c* der signalisierten Parameter in Einheiten von $T_C$ erhalten werden kann, wobei $N_{TA,power}$ über einen zweiten Parameter *b* der signalisierten Parameter erhalten werden kann, wobei $N_{TA,scale}$ über einen ersten Parameter *a* der signalisierten Parameter in Einheiten von $T_C$ pro Einheit von $n_0^b$ erhalten werden kann, wobei $n_0$ die Zeit beschreibt, zu der die Parameter *a, b und c* an das Nutzergerät ($302_1$) signalisiert werden, und wobei $n_{CurrentSlot}$ eine bestimmte Zeit beschreibt, zu der der bestimmte Zeitvorlauf gültig ist;
oder wobei die nichtlineare Funktion wie folgt ist:

$$N_{TA,common} = N_{TA,cons} + \left\lfloor (n_{CurrentSlot} \mp n_0) \times N_{TA,driftRate}^{UE\ autonomous} \right\rfloor$$

$$N_{TA,driftRate}^{UE\ autonomous} = N_{TA,scale} \times N_{TA,power} \times (n_{CurrentSlot})^{N_{TA,power}-1}$$

**wobei** $N_{TA,common}$ den gemeinsamen Zeitvorlauf in Einheiten von $T_C$ beschreibt, wobei $N_{TA,cons}$ über einen dritten Parameter c der signalisierten Parameter in Einheiten von $T_C$ erhalten werden kann, wobei $N_{TA,power}$ über einen zweiten Parameter b der signalisierten Parameter erhalten werden kann, wobei $N_{TA,scale}$ über einen ersten Parameter $a$ der signalisierten Parameter erhalten werden kann, wobei $N_{TA,driftRate}^{UE\ autonomous}$ die autonom berechnete UE-Driftrate in den Einheiten von $T_C$ pro Einheit von $n_0$ ist, wobei $n_0$ die Referenzzeit beschreibt, die dem UE angezeigt wird, und wobei $n_{CurrentSlot}$ eine bestimmte Zeit beschreibt, zu der der bestimmte Zeitvorlauf gültig ist.

12. Basisstation (300) gemäß einem der Ansprüche 9 bis 11,

wobei die Steuerinformationen absolute Parameter zum Parametrisieren der nichtlinearen Funktion signalisieren,
oder wobei die Steuerinformationen einen Index eines Eintrags einer Tabelle signalisieren, in dem die entsprechenden Parameter gespeichert sind,
oder wobei die Steuerinformationen, die den zumindest einen Parameter signalisieren, über einen Systeminformationsblock übertragen werden.

13. Verfahren zum Betreiben eines Nutzergeräts ($302_1$) eines Drahtloskommunikationssystems, wobei das Verfahren folgende Schritte aufweist:

Empfangen,

- von einer Basisstation (300) des Drahtloskommunikationssystems über einen Satelliten (3049 des Drahtloskommunikationssystems,
- oder von einem anderen Nutzergerät ($302_2$) des Drahtloskommunikationssystems über einen Sidelink,

von Steuerinformationen, wobei die Steuerinformationen Parameter zum Parametrisieren einer nichtlinearen Funktion signalisieren, wobei die parametrisierte nichtlineare Funktion einen Verlauf einer Umlaufzeit oder Verzögerungszeit zwischen

- dem Satelliten (304) und entweder der Basisstation (300) oder dem Satelliten-Gateway des Drahtloskommunikationssystems, oder
- dem Satelliten (304) und einem geografischen Referenzpunkt des Drahtloskommunikationssystems, oder
- einem ersten Referenzpunkt und einem zweiten Referenzpunkt, wobei der erste Referenzpunkt eine feste Beziehung zu dem Satelliten aufweist und der zweite Referenzpunkt eine feste Beziehung zu entweder der Basisstation (300), dem Satelliten-Gateway oder dem Nutzergerät ($302_1$) aufweist,

in Abhängigkeit von einem Standort des Satelliten (304) beschreibt,
wobei Kommunikationen mit der Basisstation (300) unter Verwendung der parametrisierten nichtlinearen Funktion zeitlich synchronisiert werden.

14. Verfahren zum Betreiben einer Basisstation (300) eines Drahtloskommunikationssystems, wobei das Verfahren folgende Schritte aufweist:

Übertragen von Steuerinformationen an ein Nutzergerät ($302_1$) des Drahtloskommunikationssystems über einen Satelliten (304) des Drahtloskommunikationssystems, wobei die Steuerinformationen Parameter zum Parametrisieren einer nichtlinearen Funktion signalisieren, wobei die parametrisierte nichtlineare Funktion einen Verlauf einer Umlaufzeit oder Verzögerungszeit zwischen

- dem Satelliten (304) und entweder der Basisstation (300) oder dem Satelliten-Gateway des Drahtloskommunikationssystems, oder
- dem Satelliten (304) und einem geografischen Referenzpunkt des Drahtloskommunikationssystems, oder
- einem ersten Referenzpunkt und einem zweiten Referenzpunkt, wobei der erste Referenzpunkt eine feste Beziehung zu dem Satelliten aufweist und der zweite Referenzpunkt eine feste Beziehung zu entweder der Basisstation (300), dem Satelliten-Gateway oder dem Nutzergerät ($302_1$) aufweist,

in Abhängigkeit von einem Standort des Satelliten (304) beschreibt,
wobei das Nutzergerät (302i) Kommunikationen mit der Basisstation (300) unter Verwendung der parametrisierten nichtlinearen Funktion zeitlich synchronisiert.

**15.** Computerprogramm, das Anweisungen aufweist, die, wenn das Programm durch einen Computer ausgeführt wird, den Computer veranlassen, das Verfahren gemäß Anspruch 13 bis 14 auszuführen.

**Revendications**

**1.** Équipement utilisateur ($302_1$) d'un système de communication sans fil,

dans lequel l'équipement utilisateur ($302_1$) est configuré pour communiquer avec une station de base (300) du système de communication sans fil via un satellite (304) du système de communication sans fil,
dans lequel l'équipement utilisateur ($302_1$) est configuré pour recevoir, en provenance de la station de base (300) via le satellite (304) ou en provenance d'un autre équipement utilisateur ($302_2$) du système de communication sans fil via une liaison latérale, une information de commande, l'information de commande signalant des paramètres pour paramétrer une fonction non linéaire, la fonction non linéaire paramétrée décrivant un cours d'un temps aller-retour ou d'un temps de retard entre

- le satellite (304) et l'une parmi la station de base (300) ou une passerelle satellite du système de communication sans fil, ou
- le satellite (304) et un point de référence géographique du système de communication sans fil, ou
- un premier point de référence et un second point de référence, le premier point de référence ayant une relation fixe vis-à-vis du satellite (304) et le second point de référence ayant une relation fixe vis-à-vis de l'un parmi la station de base (300), la passerelle satellite ou l'équipement utilisateur ($302_1$),

en fonction d'un emplacement du satellite (304),
dans lequel l'équipement utilisateur ($302_1$) est configuré pour synchroniser dans le temps les communications avec la station de base (300) en utilisant la fonction non linéaire paramétrée.

**2.** Équipement utilisateur ($302_1$) selon la revendication 1,

dans lequel l'équipement utilisateur ($302_1$) est configuré pour déterminer un temps aller-retour ou un temps de retard pour un certain moment en utilisant la fonction non linéaire paramétrée,
dans lequel l'équipement utilisateur ($302_1$) est configuré pour synchroniser dans le temps les communications avec la station de base (300) au certain moment sur la base du temps aller-retour ou temps de retard déterminé.

**3.** Équipement utilisateur ($302_1$) selon l'une des revendications 1 à 2,

dans lequel la fonction linéaire décrit le cours du temps aller-retour ou temps de retard entre le satellite (304) et l'un parmi la station de base (300) ou la passerelle satellite, dans lequel le temps aller-retour ou temps de retard est un temps aller-retour de liaison de connexion ou temps de retard de liaison de connexion,
ou dans lequel la fonction non linéaire décrit le cours du temps aller-retour ou temps de retard entre le satellite (304) et le point de référence géographique, dans lequel le temps aller-retour ou temps de retard est un temps aller-retour commun ou temps de retard commun,
ou dans lequel la fonction non linéaire paramétrée décrit le cours du temps aller-retour ou temps de retard entre le premier point de référence et le second point de référence, dans lequel l'information de commande décrit en outre une partie du temps aller-retour ou temps de retard entre la station de base (300) et le satellite (304) qui n'est pas décrite par la fonction non linéaire paramétrée.

**4.** Équipement utilisateur ($302_1$) selon la revendication 3,
dans lequel l'équipement utilisateur ($302_1$) est configuré pour synchroniser dans le temps les communications avec la station de base (300) en utilisant en outre la partie du temps aller-retour ou temps de retard qui n'est pas décrite par la fonction non linéaire paramétrée.

**5.** Équipement utilisateur ($302_1$) selon l'une des revendications 1 à 4, dans lequel la fonction non linéaire est une puissance de fonction ou une fonction exponentielle ou une fonction polynomiale ;

ou dans lequel la fonction non linéaire est :

$$T_{RTT/delay} = a \cdot f(t \pm t_0)^b + c$$

dans lequel $T_{RTT/delay}$ décrit le temps aller-retour ou temps de retard déterminé, dans lequel a, *b* et *c* décrivent les paramètres signalés par l'information de commande, dans lequel $t_0$ décrit le moment où les paramètres *a*, *b* et *c* sont signalés à l'équipement utilisateur ($302_1$), et dans lequel *t* décrit un certain moment où le temps aller-retour ou temps de retard déterminé est valide ;
ou dans lequel la fonction non linéaire est

$$N_{TA,common} = N_{TA,cons} + \left\lfloor (n_{CurrentSlot} \pm n_0)^{N_{TA,power}} \times N_{TA,scale} \right\rfloor$$

dans lequel $N_{TA,common}$ décrit l'avance temporelle commune en unités de $T_C$, dans lequel $N_{TA,cons}$ peut être obtenu via un troisième paramètre c des paramètres signalés en unités de *Tc*, dans lequel $N_{TA,power}$ peut être obtenu via un deuxième paramètre *b* des paramètres signalés, dans lequel $N_{TA,scale}$ peut être obtenu via un premier paramètre a des paramètres signalés en unités de Tc par unité de $n_0^b$ , dans lequel $n_0$ décrit le moment où les paramètres *a*, *b* et *c* sont signalés à l'équipement utilisateur, et dans lequel $n_{CurrentSlot}$ décrit un certain moment auquel l'avance temporelle déterminée est valide ;
ou dans lequel la fonction linéaire est

$$N_{TA,common} = N_{TA,cons} + \left\lfloor (n_{CurrentSlot} \pm n_0) \times N_{TA,driftRate}^{UE\ autonomous} \right\rfloor$$

$$N_{TA,driftRate}^{UE\ autonomous} = N_{TA,scale} \times N_{TA,power} \times (n_0)^{N_{TA,power}-1}$$

dans lequel $N_{TA,common}$ décrit l'avance temporelle commune en unités de $T_C$, dans lequel $N_{TA,cons}$ peut être obtenu via un troisième paramètre c des paramètres signalés en unités de $T_C$, dans lequel $N_{TA,power}$ peut être obtenu via un deuxième paramètre *b* des paramètres signalés, dans lequel $N_{TA,scale}$ peut être obtenu via un premier paramètre a des paramètres signalés, $N_{TA,driftRate}^{UE\ autonomous}$ est le taux de dérive calculé de façon autonome de l'UE dans les unités de $T_C$ par unité de $n_0$, dans lequel $n_0$ décrit le moment de référence indiqué de manière implicite ou explicite à l'UE, et dans lequel $n_{CurrentSlot}$ décrit un certain moment auquel l'avance temporelle déterminée est valide.

6. Équipement utilisateur ($302_1$) selon l'une des revendications 1 à 5,
dans lequel l'équipement utilisateur ($302_1$) est configuré pour déterminer une avance temporelle pour un certain moment sur la base de la fonction non linéaire paramétrée.

7. Équipement utilisateur ($302_1$) selon l'une des revendications 1 à 6,

dans lequel l'information de commande signale des paramètres absolus pour paramétrer la fonction non linéaire, ou dans lequel l'information de commande signale un indice d'une entrée parmi une pluralité d'entrées d'un tableau, dans chaque entrée du tableau étant stocké au moins un paramètre associé à un satellite correspondant parmi une pluralité de satellites du système de communication,
ou dans lequel l'information de commande signalant le au moins un paramètre est transmise via un bloc d'informations de système.

8. Équipement utilisateur ($302_1$) selon l'une des revendications 1 à 7,

dans lequel l'équipement utilisateur ($302_1$) est configuré, en cas d'un transfert vers un autre satellite ou d'une commutation vers une autre liaison de connexion, pour recevoir une autre information de signalisation avant le transfert vers l'autre satellite ou la commutation vers l'autre liaison de connexion, l'autre information de signalisation décrivant au moins un autre paramètre pour paramétrer la fonction non linéaire, l'autre fonction non linéaire paramétrée décrivant un cours d'un temps aller-retour ou retard après le transfert vers l'autre satellite ou la commutation vers l'autre liaison de connexion,
ou dans lequel l'équipement utilisateur ($302_1$) est configuré pour retarder ou retransmettre l'information de signalisation signalant le au moins un paramètre à au moins un autre équipement utilisateur ($302_1$) du système de communication sans fil via la liaison latérale,

dans lequel l'équipement utilisateur ($302_1$) est configuré pour communiquer avec au moins deux satellites, dans lequel l'équipement utilisateur ($302_1$) est configuré pour recevoir, pour chacun des au moins deux satellites, une information de commande présentant au moins un paramètre correspondant pour paramétrer la fonction non linéaire,

ou dans lequel l'équipement utilisateur ($302_1$) est configuré pour communiquer avec la station de base (300) via le satellite (304) en utilisant une agrégation de porteuses,

ou dans lequel l'équipement utilisateur ($302_1$) est configuré pour communiquer avec la station de base (300) via le satellite (304) en tant liaison montante supplémentaire.

**9.** Station de base (300) d'un système de communication sans fil,

dans lequel la station de base (300) est configurée pour communiquer avec un équipement utilisateur ($302_1$) du système de communication sans fil via un satellite (304) du système de communication sans fil,

dans lequel la station de base (300) est configurée pour transmettre à l'équipement utilisateur ($302_1$) via le satellite (304) une information de commande, l'information de commande signalant des paramètres pour paramétrer une fonction non linéaire, la fonction non linéaire paramétrée décrivant un cours d'un temps aller-retour ou d'un temps de retard entre

- le satellite (304) et l'une parmi la station de base (300) ou une passerelle satellite du système de communication sans fil, ou
- le satellite (304) et un point de référence géographique du système de communication sans fil, ou
- un premier point de référence et un second point de référence, le premier point de référence ayant une relation fixe vis-à-vis du satellite et le second point de référence ayant une relation fixe vis-à-vis de l'un parmi la station de base (300), la passerelle satellite ou l'équipement utilisateur ($302_1$),

en fonction d'un emplacement du satellite (304),

dans lequel l'équipement utilisateur ($302_1$) est configuré pour synchroniser dans le temps les communications avec la station de base (300) en utilisant la fonction non linéaire paramétrée.

**10.** Station de base (300) selon la revendication 9,

dans laquelle la fonction linéaire décrit le cours du temps aller-retour ou temps de retard entre le satellite (304) et l'un parmi la station de base (300) ou la passerelle satellite, dans lequel le temps aller-retour ou temps de retard est un temps aller-retour de liaison de connexion ou temps de retard de liaison de connexion,

ou dans laquelle la fonction non linéaire décrit le cours du temps aller-retour ou temps de retard entre le satellite (304) et le point de référence géographique, dans lequel le temps aller-retour ou temps de retard est un temps aller-retour commun ou temps de retard commun,

ou dans laquelle la fonction non linéaire paramétrée décrit le cours du temps aller-retour ou temps de retard entre le premier point de référence et le second point de référence, dans lequel l'information de commande décrit en outre une partie du temps aller-retour ou temps de retard entre la station de base (300) et le satellite (304) qui n'est pas décrite par la fonction non linéaire paramétrée.

**11.** Station de base (300) selon l'une des revendications 9 à 10,

dans laquelle la fonction non linéaire est une puissance de fonction ou une fonction exponentielle ou une fonction polynomiale ;

ou dans lequel la fonction non linéaire est :

$$T_{RTT/delay} = a \cdot f(t \pm t_0)^b + c$$

dans lequel $T_{RTT/delay}$ décrit le temps aller-retour ou temps de retard déterminé, dans lequel *a*, *b* et *c* décrivent les paramètres signalés par l'information de commande, dans lequel $t_0$ décrit le moment où les paramètres a, *b* et *c* sont signalés à l'équipement utilisateur ($302_1$), et dans lequel *t* décrit un certain moment où le temps aller-retour ou temps de retard déterminé est valide ;

ou dans lequel la fonction non linéaire est

$$N_{TA,common} = N_{TA,cons} + \left\lfloor (n_{CurrentSlot} \pm n_0)^{N_{TA,power}} \times N_{TA,scale} \right\rfloor$$

dans lequel $N_{TA,common}$ décrit l'avance temporelle commune en unités de $T_C$, dans lequel $N_{TA,cons}$ peut être obtenu via un troisième paramètre c des paramètres signalés en unités de $T_C$, dans lequel $N_{TA,power}$ peut être obtenu via un deuxième paramètre b des paramètres signalés, dans lequel $N_{TA,scale}$ peut être obtenu via un premier paramètre a des paramètres signalés en unités de $T_C$ par unité de $n_0^b$ , dans lequel $n_0$ décrit le moment où les paramètres a, b et c sont signalés à l'équipement utilisateur ($302_1$), et dans lequel $n_{CurrentSlot}$ décrit un certain moment auquel l'avance temporelle déterminée est valide ;
ou dans lequel la fonction linéaire est

$$N_{TA,common} = N_{TA,cons} + \left\lfloor (n_{CurrentSlot} \pm n_0) \times N_{TA,driftRate}^{UE\ autonomous} \right\rfloor$$

$$N_{TA,driftRate}^{UE\ autonomous} = N_{TA,scale} \times N_{TA,power} \times (n_0)^{N_{TA,power}-1}$$

dans lequel $N_{TA,common}$ décrit l'avance temporelle commune en unités de $T_C$, dans lequel $N_{TA,cons}$ peut être obtenu via un troisième paramètre c des paramètres signalés en unités de $T_C$, dans lequel $N_{TA,power}$ peut être obtenu via un deuxième paramètre b des paramètres signalés, dans lequel $N_{TA,scale}$ peut être obtenu via un premier paramètre a des paramètres signalés, $N_{TA,driftRate}^{UE\ autonomous}$ est le taux de dérive calculé de façon autonome de l'UE dans les unités de $T_C$ par unité de $n_0$, dans lequel $n_0$ décrit le moment de référence indiqué de à l'UE, et dans lequel $n_{CurrentSlot}$ décrit un certain moment auquel l'avance temporelle déterminée est valide.

12. Station de base (300) selon l'une des revendications 9 à 11,

dans laquelle l'information de commande signale des paramètres absolus pour paramétrer la fonction non linéaire,
ou dans laquelle l'information de commande signale un indice d'une entrée d'un tableau dans lequel sont stockés les paramètres correspondants,
ou dans laquelle l'information de commande signalant le au moins un paramètre est transmise via un bloc d'informations de système.

13. Procédé de fonctionnement d'un équipement utilisateur ($302_1$) d'un système de communication sans fil, le procédé comprenant le fait de :

recevoir,

- à partir d'une station de base (300) du système de communication sans fil via un satellite (304) du système de communication sans fil
- ou d'un autre équipement utilisateur ($302_2$) du système de communication sans fil via une liaison latérale,

une information de commande, l'information de commande signalant des paramètres pour paramétrer une fonction non linéaire, la fonction non linéaire paramétrée décrivant un cours d'un temps aller-retour ou d'un temps de retard entre

- le satellite (304) et l'une parmi la station de base (300) ou une passerelle satellite du système de communication sans fil, ou
- le satellite (304) et un point de référence géographique du système de communication sans fil, ou
- un premier point de référence et un second point de référence, le premier point de référence ayant une relation fixe vis-à-vis du satellite et le second point de référence ayant une relation fixe vis-à-vis de l'un parmi la station de base (300), la passerelle satellite ou l'équipement utilisateur ($302_1$),

en fonction d'un emplacement du satellite (304),
dans lequel les communications avec la station de base (300) sont synchronisées dans le temps en utilisant la fonction non linéaire paramétrée.

**14.** Procédé de fonctionnement d'une station de base (300) d'un système de communication sans fil, le procédé comprenant le fait de :

transmettre à un équipement utilisateur ($302_1$) du système de communication sans fil via le satellite (304) du système de communication sans fil une information de commande, l'information de commande signalant des paramètres pour paramétrer une fonction non linéaire, la fonction non linéaire paramétrée décrivant un cours d'un temps aller-retour ou d'un temps de retard entre

- le satellite (304) et l'une parmi la station de base (300) ou une passerelle satellite du système de communication sans fil, ou
- le satellite (304) et un point de référence géographique du système de communication sans fil, ou
- un premier point de référence et un second point de référence, le premier point de référence ayant une relation fixe vis-à-vis du satellite et le second point de référence ayant une relation fixe vis-à-vis de l'un parmi la station de base (300), la passerelle satellite ou l'équipement utilisateur ($302_1$),

en fonction d'un emplacement du satellite (304),
dans lequel l'équipement utilisateur ($302_1$) est configuré pour synchroniser dans le temps les communications avec la station de base (300) en utilisant la fonction non linéaire paramétrée.

**15.** Programme informatique comprenant des instruction qui, lorsque le programme est exécuté par un ordinateur, amener l'ordinateur à réaliser le procédé selon la revendication 13 ou 14.

Fig. 1(a)

Fig. 1(b)

Fig. 2

Fig. 3

Fig. 4

Fig. 5

Fig. 6

EP 4 315 787 B1

Fig. 7

Fig. 8

EP 4 315 787 B1

Fig. 9

Fig. 10

Fig. 11

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20200196263 A1

### Non-patent literature cited in the description

- **HUAWEI et al.** Discussion on UL time and frequency synchronization enhancement for NTN. *3GPP DRAFT; R1-2100223, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 19 January 2021, vol. RAN WG1 (E-meeting), https://ftp.3gpp.org/tsg_ran/WG1_RL1/TSGR1_104-e/Docs/ R1-2100223.zip R1-2100223.docx
- Study on New Radio (NR) to support non terrestrial networks (Release 15). *3GPP TR 38.811*, June 2019
- 3rd Generation Partnership Project; Technical Specification Group Radio Access Network; Solutions for NR to support non-terrestrial networks (NTN) (Release 16). *3GPP TR 38.821 v16.0.0*, December 2019
- **ERICSSON**. On UL time and frequency synchronization enhancements for NTN. *R1-2100927*, January 2021
- Report from Break-out session on R16 eMIMO, CLI, PRN, RACS and R17 NTN and REDCAP. *R2-2010702*, November 2020
- Report from Break-out session on R16 eMIMO, CLI, PRN, RACS and R17 NTN and REDCAP. *R2-2101952*, January 2021
- RAN1 Chairman's Notes. *3GPP TSG RAN WG1 Meeting #104-e*, January 2021
- RAN1 Chairman's Notes 8.4 v005. *3GPP TSG RAN WG1 Meeting #104-e*, January 2021